(19) Europäisches Patentamt
European Patent Office
Office européen des brevets

(11) **EP 3 237 176 B1**

(12) **EUROPÄISCHE PATENTSCHRIFT**

(45) Veröffentlichungstag und Bekanntmachung des Hinweises auf die Patenterteilung:
**18.07.2018   Patentblatt 2018/29**

(21) Anmeldenummer: **15817216.3**

(22) Anmeldetag: **17.12.2015**

(51) Int Cl.:
*B29C 65/10* (2006.01)    *B32B 37/04* (2006.01)
*B32B 37/06* (2006.01)    *B32B 37/18* (2006.01)
*B32B 27/06* (2006.01)    *B29C 65/14* (2006.01)
*B29C 65/72* (2006.01)    *B29K 105/04* (2006.01)
*B29L 9/00* (2006.01)

(86) Internationale Anmeldenummer:
**PCT/EP2015/080180**

(87) Internationale Veröffentlichungsnummer:
**WO 2016/102292 (30.06.2016 Gazette 2016/26)**

(54) **VERFAHREN ZUR HERSTELLUNG MEHRLAGIGER THERMOPLASTISCHER PLATTEN DURCH THERMISCHES VERSCHWEISSEN UNTERSCHIEDLICHER PLATTEN**

METHOD FOR PRODUCING MULTI-LAYERED THERMOPLASTIC PLATES BY MEANS OF THERMAL WELDING OF DIFFERENT PLATES

PROCÉDÉ DE FABRICATION DE PLAQUES THERMOPLASTIQUES MULTICOUCHES PAR SOUDURE THERMIQUE DE PLAQUES DIFFÉRENTES

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **22.12.2014   EP 14199632**

(43) Veröffentlichungstag der Anmeldung:
**01.11.2017   Patentblatt 2017/44**

(73) Patentinhaber: **BASF SE**
**67056 Ludwigshafen (DE)**

(72) Erfinder:
• **NEUFELD, Eckhard**
  **67117 Limburgerhof (DE)**
• **SANDNER, Carsten**
  **67098 Bad Dürkheim (DE)**
• **DIEHLMANN, Tim**
  **67283 Obrigheim-Colgenstein (DE)**
• **DIETZEN, Franz-Josef**
  **67454 Haßloch (DE)**
• **SCHERZER, Dietrich**
  **67433 Neustadt (DE)**

(74) Vertreter: **BASF IP Association**
**BASF SE**
**G-FLP-C006**
**67056 Ludwigshafen (DE)**

(56) Entgegenhaltungen:
**EP-A1- 0 922 559     GB-A- 2 435 852**

## Beschreibung

Die vorliegende Erfindung betrifft ein Verfahren zur Herstellung von zumindest zweilagigen thermoplastischen Platten durch thermisches Verschweißen von zumindest einer ersten dünneren thermoplastischen Platte mit einer Dichte (D1) und zumindest einer zweiten dünneren thermoplastischen Platte mit einer Dichte (D2), wobei die Dichte (D1) der ersten dünneren thermoplastischen Platte kleiner ist als die Dichte (D2) der zweiten dünneren thermoplastischen Platte. Bei dem Verfahren werden zumindest ein erstes Heizelement und zumindest ein zweites Heizelement auf zueinander versetzten Ebenen zwischen die beiden dünneren thermoplastischen Platten eingeführt, wobei sich die Oberflächen der dünneren thermoplastischen Platten die Oberflächen der Heizelemente nicht berühren. Das erste Heizelement überträgt eine Energiemenge (E1) auf die Oberfläche der ersten dünneren thermoplastischen Platte und das zweite Heizelement eine Energiemenge (E2) auf die Oberfläche der zweiten dünneren thermoplastischen Platte, wobei die Energiemenge (E1) kleiner ist als die Energiemenge (E2).

Die Anzahl der Lagen der zumindest zweilagigen thermoplastischen Platte als solche ergibt sich aus der Anzahl der dünneren thermoplastischen Platten, die miteinander thermisch verschweißt werden. Wird beispielsweise eine erste dünnere thermoplastische Platte mit zwei zweiten dünneren thermoplastischen Platten verschweißt, so ergibt sich eine dreilagige thermoplastische Platte, werden beispielsweise zwei erste dünnere thermoplastische Platten mit zwei zweiten dünneren thermoplastischen Platten verschweißt, so ergibt sich eine vierlagige thermoplastische Platte.

EP-A 1 318 164 betrifft ein Verfahren zur Herstellung von dicken extrudierten Polystyrol-Schaumstoffplatten (XPS-Platten) durch Verbinden zweier oder mehrerer dünner Platten. Die dicken Platten werden erhalten, indem die dünnen Platten an den Flächen, an denen sie verbunden werden sollen, mit einem organischen Lösungsmittel für Polystyrol gleichmäßig benetzt werden. Dadurch wird die Schaumstoffoberfläche angelöst und die Platten können anschließend miteinander verpresst werden. Als Lösungsmittel eignen sich beispielsweise Kohlenwasserstoffe, Alkohole oder Ether, die einen Siedepunkt zwischen 50 und 250 °C aufweisen. Weiterhin können in dem Verfahren gemäß EP-A 1 318 164 die Schäumhäute an den Hauptflächen der miteinander zu verbindenden Platten geschält werden, bevor sie mit dem Lösungsmittel benetzt werden. Die EP-A 1 318 164 beschreibt kein Verfahren, um thermoplastische Platten unterschiedlicher Dichte miteinander zu verbinden.

EP-A 1 213 119 offenbart ein Verfahren zur Verbindung von mindestens zwei Ausgangsplatten aus thermoplastischem Kunststoffschaum zu einer neuen Platte, wobei die Ausgangsplatten an den Berührungsflächen extrusionshautlos sind und die Verbindung der Ausgangsplatten durch Quellschweißen erfolgt. Zum Quellschweißen werden organische Lösungsmittel eingesetzt, die einen Siedepunkt < 150°C aufweisen, beispielsweise Aceton oder Gemische von organischen Lösungsmitteln mit Wasser. Auch die EP-A 1 213 119 beschreibt nicht die Verbindung von thermoplastischen Platten unterschiedlicher Dichte.

Extrudierte Kunststoffschaumplatten von großer Dicke werden in DE-A 101 06 341 offenbart. Mit dem darin beschriebenen Verfahren zur Verbindung von mindestens zwei Ausgangplatten aus Kunststoffschaum zu einer neuen Platte können Platten mit einer Mindestdicke von 70 mm hergestellt werden. Vorzugsweise handelt es sich dabei um fluorchlorkohlenwasserstofffreie Polystyrol-Schaumplatten. In dem Verfahren werden die Ausgangsplatten, die an der Berührungsfläche extrusionshautlos sind, miteinander verbunden, indem ein diffusionsoffener Kleber oder mechanische Verbindungselemente verwendet werden. Das Verfahren kann alternativ auch so durchgeführt werden, dass bei teilflächiger Verbindung und stellenweiser Verschweißung oder stellenweiser Verklebung ein nicht diffusionsfähiger Kleber oder nur ein gering diffusionsfähiger Kleber verwendet werden. Als Polystyrol-Schaumplatten eignen sich insbesondere XPS-Platten. In DE-A 101 06 341 sind jedoch keine Angaben enthalten, wie anstelle einer Verklebung die Verschweißung der Ausgangsplatten konkret durchgeführt werden kann. Die DE-A 101 06 341 beschreibt nicht die Verbindung von Platten unterschiedlicher Dichte. In einer bevorzugten Ausführungsform weisen auch die Verbindungselemente die gleiche Dichte wie die Platten auf.

DE-A 44 21 016 offenbart ein Verfahren zur Herstellung von $CO_2$-geschäumten Kunststoffplatten großer Dicke, insbesondere aus Polystyrol und/oder Polyethylen, wobei eine Doppelung der entsprechenden Ausgangsplatten durch thermisches Verschweißen erfolgt. Das thermische Verschweißen wird mit Hilfe eines Heizschwertes durchgeführt, wodurch die Oberflächen der eingesetzten Kunststoffschaumplatten angeschmolzen werden. Die zu verschweißenden Ausgangsplatten werden über das Heizschwert gezogen, wobei es zu einem direkten Kontakt von Heizschwert und Ausgangsplatten kommt. Das vorzugsweise mit einer Teflonschicht versehene Heizschwert kann elektrisch oder mit einem durchfließenden Heizmedium auf die notwendige Schweißtemperatur gebracht werden, die je nach Kunststoffschaum zwischen 100 und 150 °C beträgt. Die Verschweißung von Platten unterschiedlicher Dichte wird nicht beschrieben.

Thermische Dämmstoffe aus XPS-Kompositmaterialien, die dreilagig sind, werden in WO 2012/016991 beschrieben. Die Dreilagigkeit der Kompositmaterialien ergibt sich dadurch, dass eine untere, eine zentrale und eine obere XPS-Platte zu dem XPS-Kompositmaterial vereinigt werden, wobei jede nach außen gerichtete Seite dieses XPS-Kompositmaterials eine Extrusionshaut umfasst. Während die Kontaktseiten der zentralen XPS-Platte ebenfalls eine Extrusionshaut aufweisen, wird diese bei den entsprechenden Kontaktseiten der oberen sowie unteren XPS-Platte entfernt. Die einzelnen XPS-Platten werden zum XPS-Kompositmaterial durch thermisches Verschweißen an den Kontaktflächen zusammengefügt. Das thermische Verschweißen wird bevorzugt unter Verwendung eines Heizschwertes sowie mit direktem Kontakt vom Heizschwert mit den zu verschweißenden XPS-Platten durch Bewegung der XPS-Platten über ein starr angeordnetes Heizschwert durchgeführt. Die zwischen den einzelnen XPS-Platten ausgebildete Schweißnaht kann Teilbereiche von unterschiedlicher Intensität aufweisen, was bedeutet, dass die entsprechende Schweißnaht an einigen Stellen stärker, an anderen Stellen hingegen schwächer ausgebildet ist. Die Verwendung von XPS-Platten unterschiedlicher Dichte wird nicht beschrieben.

EP-A 2 578 381 betrifft ein Verfahren zur Herstellung von mehrschichtigen Plastikplatten, wie beispielsweise XPS, durch thermisches Verschweißen der entsprechenden dünneren Ausgangsplatten unter Verwendung eines zweigeteilten Heizelementes. Unterschiedliche Dichten der Ausgangsplatten werden nicht offenbart. Das zweiteilige Heizelement ist in Plattenform ausgeführt und die beiden Plattenteile werden von außen kommend auf einer Ebene zwischen die beiden zu verschweißenden Ausgangsplatten geführt, so dass sich die beiden Plattenteile berühren und sinngemäß eine einzige (auf das Doppelte gegenüber den jeweiligen Plattenteilen) verbreiterte Heizplatte darstellen. Das thermische Verschweißen wird vorzugsweise ohne direkten Kontakt zwischen den Heizelementen und den zu verschweißenden Plastikplatten durchgeführt. Das Heizelement wird für eine ausreichend lange Zeit zwischen den zu verschweißenden Ausgangsplatten gehalten. Eine konkrete Zeitangabe für den Begriff "ausreichend lange Zeit" ist in EP-A 2 578 381 jedoch nicht enthalten. Vielmehr ist die Zeit dann ausreichend, wenn die Ausgangsplatten an den jeweiligen Oberflächen im Wesentlichen in einem geschmolzenen Zustand vorliegen.

Ein weiteres Verfahren zur Herstellung von mehrschichtigen thermoplastischen Schaumstoffen durch thermisches Verschweißen von entsprechend dünneren Ausgangsplatten wird in US-A 4,764,328 offenbart. Bei diesem Verfahren findet unter Verwendung einer einzelnen Heizplatte, die gegebenenfalls auch in zwei Teilen vorliegen kann, ein direkter Kontakt zwischen Heizplatte und den zu verschweißenden Oberflächen der Ausgangsplatten beim Verschweißungsvorgang statt. Nachdem die zu verschweißenden Oberflächen unter Verwendung der Heizplatte so weit erhitzt worden sind, dass sie sich in einem flüssigen Zustand befinden, erfolgt in einer kurzen zeitlichen Abfolge das Verpressen der Ausgangsplatten. Die Ausgangsplatten können in weniger als einer Sekunde nach Entfernung der Heizplatten verpresst werden. Die Ausgangsplatten weisen niedrige Dichten auf, unterschiedliche Dichten der Ausgangsplatten werden in der US-A 4,764,328 allerdings nicht offenbart.

DE-A 10 2012 204 822 betrifft ein Verfahren zum dauerhaften flächigen Verbinden von zwei Werkstoffplatten von zwei aufgeschäumten Materialien. Eine erste und eine zweite Werkstoffplatte werden jeweils mit einer Fördereinrichtung in der gewünschten Orientierung und Deckung passgenau übereinander positioniert, einer Schweißstation zugeführt und dort entlang eines Trennschwertes bewegt. Durch die Positionierung des Trennschwertes zwischen den einander zugewandten Oberflächen der beiden Werkstoffplatten wird ein Spalt mit definierter Spaltbreite erzeugt. Durch ein sich im Spaltstrom abwärts zum Trennschwert befindendes fest installiertes Wärmeelement, vorzugsweise ein Heizschwert, werden durch berührungsfreie Wärmeübertragung die einander zugewandten Oberflächen der beiden Werkstoffplatten mit Wärme beaufschlagt, so dass mindestens eine dieser Oberflächen erweicht wird oder anschmilzt. Anschließend werden die beiden Werkstoffplatten durch Andrückelemente zusammengefügt, die die beiden Werkstoffplatten derart gegeneinander drücken, dass deren einander zugewandte Oberflächen aufgrund der vorangegangenen Wärmebeaufschlagung durch das Wärmeelement stoffschlüssig miteinander verbunden werden. Gemäß der DE 10 2012 204 822 können auch Materialien unterschiedlicher Dicke miteinander verschweißt werden, unterschiedliche Dichten sind allerdings nicht offenbart.

JP 2012 232564 offenbart ein Verfahren, um thermoplastische Materialien mit anderen thermoplastischen Materialien, Holz oder beispielsweise Papier zu verschweißen. Dabei werden zwei Heizelemente, die miteinander verbunden sind, auf zwei zueinander parallelen Ebenen zwischen die Platten eingeführt und die Platten so erhitzt. Nach dem Entfernen des Heizelements werden die Platten durch Vibrationsschweißen miteinander verbunden. Gemäß JP 2012 232564 schmelzen die Platten erst durch die durch die Vibrationsbewegung verursachte Reibungswärme auf, nicht durch das Erhitzen mit den Heizelementen.

Die EP 2353846 beschreibt ein Verfahren zur Herstellung von Dämmplatten aus expandiertem Polystyrol (EPS), wobei eine dämmende Schicht mit einer Deckschicht verbunden wird. Als dämmende Schicht wird beispielsweise eine EPS-Platte, die dunkle Pigmente wie beispielsweise Graphitpartikel enthält, eingesetzt, als Deckschicht eignet sich eine EPS-Platte, die keine Pigmente enthält. Bei dem Verfahren werden die beiden Platten durch Kontakt mit einem keilförmigen Heizschwert, das ölbeheizt ist, erwärmt und anschließend zusammengedrückt um miteinander zu verschweißen. Auch die EP 2353846 beschreibt nicht die Verwendung von Platten unterschiedlicher Dichte.

EP-A 0 922 559 betrifft ein Verfahren zum Verbinden von Bauteilen aus Partikelschaumstoffen untereinander oder mit anderen Bauteilen aus anderen Werkstoffen. Bei dem Verfahren wird die zu verschweißende Fläche der Bauteile erwärmt durch Wärmgas und/oder ein Heizelement und/oder Reaktionsreibung und/oder Vibration und/oder Heizstrahler. Anschließend werden die zu verschweißenden Flächen gegeneinander gepresst. Es werden verschiedene thermoplastische Materialien beschrieben, unter anderem Polypropylen, expandiertes Polypropylen sowie Copolymere aus diesen beiden Polymeren und thermoplastische Polyolefin-Elastomere. In EP-A 0 922 559 ist jedoch nirgendwo offenbart, dass beim Verschweißen zwei Heizelemente auf zwei zueinander parallelen Ebenen eingesetzt werden können.

GB-A 2 435 852 betrifft ein Verfahren, um die beiden Enden eines Dichtrings miteinander zu verschweißen. Dabei wird eine Folie zwischen die beiden Enden des Dichtrings eingebracht und die beiden Enden des Dichtrings sowie die Folie erwärmt. Das Verschweißen von thermoplastischen Platten wird in GB-A 2 435 852 jedoch nicht offenbart.

Die im Stand der Technik beschriebenen Verfahren zum Verbinden zweier Platten sind zum Verschweißen von zwei thermoplastischen Platten mit unterschiedlicher Dichte häufig nicht geeignet, da die Oberfläche der beiden thermoplastischen Platten unterschiedlicher Dichte unterschiedlich schnell aufschmelzen und sich dann beim Verpressen der beiden Platten ungleichmäßige Schweißnähte ausbilden. Außerdem besteht die Gefahr, dass die Platte niedrigerer Dichte komplett aufschmilzt bevor die Oberfläche der thermoplastischen Platte höherer Dichte soweit angeschmolzen ist, dass ein Verschweißen überhaupt möglich ist.

Ein weiteres Problem beim thermischen Verschweißen ist die Brennbarkeit der resultierenden zumindest zweilagigen thermoplastischen Platten sowie ihr Erfüllen von Brandtests. Selbst wenn man berücksichtigt, dass die zu verschweißenden dünneren Platten nicht oder nur sehr schwer brennbar sind, gilt eine entsprechende Aussage nicht automatisch für das erhaltene Produkt, also die zwei- oder mehrlagigen Platten mit einer (gegenüber den eingesetzten dünneren Ausgangsplatten) größeren Dicke. Dieses unterschiedliche Brandverhalten ist in der Ausbildung der so genannten Schweißnaht während des thermischen Verschweißens begründet. Die Schweißnaht bildet sich an den Stellen aus, an denen die Oberflächen der eingesetzten dünneren Platten thermisch miteinander verschweißt werden. In Abhängigkeit des Vorhandenseins bzw. der Dicke der Schweißnaht wird der Brandtest B2 (gemäß DIN 4102-1: 1998-05) bestanden oder nicht. Je umfangreicher bzw. dicker die Schweißnaht, desto höher brennen die Flammen. Dieses negative Brandverhalten (gegenüber den dünneren Ausgangsplatten) der zwei- oder mehrlagigen Platten aufgrund des Vorhandenseins einer Schweißnaht wird auch als "Dochteffekt" bezeichnet. Ist hingegen keine Schweißnaht oder nur eine sehr dünne Schweißnaht vorhanden, sind die jeweiligen dünneren Platten nicht fest genug miteinander verbunden, so dass das entsprechende Produkt nicht stabil ist.

Die der vorliegenden Erfindung zugrunde liegende Aufgabe besteht somit in der Bereitstellung eines neuen Verfahrens zur Herstellung von zumindest zweilagigen thermoplastischen Platten durch thermisches Verschweißen von zwei dünneren thermoplastischen Platten mit unterschiedlicher Dichte.

Gelöst wird diese Aufgabe durch ein Verfahren zur Herstellung von zumindest zweilagigen thermoplastischen Platten durch thermisches Verschweißen von zumindest einer ersten dünneren thermoplastischen Platte mit einer Dichte (D1) und zumindest einer zweiten dünneren thermoplastischen Platte mit einer Dichte (D2), wobei die Dichte (D1) der ersten dünneren thermoplastischen Platte kleiner ist als die Dichte (D2) der zweiten dünneren thermoplastischen Platte, umfassend die folgenden Schritte a) bis e):

a) die erste dünnere thermoplastische Platte und die zweite dünnere thermoplastische Platte werden in einem Abstand (a) parallel zueinander ausgerichtet, so dass sie einen Zwischenraum ausbilden,

b) zumindest ein erstes Heizelement und zumindest ein zweites Heizelement werden auf parallel zueinander versetzten Ebenen und parallel zu den beiden dünneren thermoplastischen Platten in den Zwischenraum eingeführt, wobei sich die Oberflächen der dünneren thermoplastischen Platten und die Oberflächen der Heizelemente nicht berühren und wobei das erste Heizelement einen Abstand (a1) zu der ersten dünneren thermoplastischen Platte aufweist und das zweite Heizelement einen Abstand (a2) zu der zweiten dünneren thermoplastischen Platte aufweist,

c) die Heizelemente werden so weit zwischen die beiden dünneren thermoplastischen Platten eingeführt, bis zwischen den beiden dünneren thermoplastischen Platten, bezogen auf jede Stelle der Oberfläche der ersten dünneren thermoplastischen Platte, zumindest zeitweise sich das erste Heizelement befunden hat und bis zwischen den beiden dünneren thermoplastischen Platten, bezogen auf jede Stelle der Oberfläche der zweiten dünneren thermoplastischen Platte, zumindest zeitweise sich das zweite Heizelement befunden hat, wobei das erste Heizelement eine Energiemenge (E1) auf die Oberfläche der ersten dünneren thermoplastischen Platte überträgt und das zweite Heizelement eine Energiemenge (E2) auf die Oberfläche der zweiten dünneren thermoplastischen Platte überträgt, wobei die Energiemenge (E1), die das erste Heizelement auf die Oberfläche der ersten dünneren thermoplastischen Platte überträgt kleiner ist als die Energiemenge (E2), die das zweite Heizelement auf die Oberfläche der zweiten dünneren thermoplastischen Platte überträgt,

d) die Heizelemente werden vollständig aus dem Zwischenraum entfernt,

e) mindestens eine der beiden dünneren thermoplastischen Platten wird gegen die Oberfläche der jeweiligen anderen dünneren thermoplastischen Platte gedrückt.

Die mit dem erfindungsgemäßen Verfahren hergestellten zumindest zweilagigen thermoplastischen Platten zeichnen sich dadurch aus, dass die entsprechende Anzahl an dünneren thermoplastischen Platten auf sehr stabile Weise zu den zumindest zweilagigen thermoplastischen Platten (Produkt) zusammengefügt werden kann. Die im erfindungsgemäßen Verfahren gebildeten Schweißnähte, die aufgrund des thermischen Verschweißens die einzelnen dünneren thermoplastischen Platten zu der zumindest zweilagigen thermoplastischen Platte verbinden, zeichnen sich durch eine hohe Stabilität sowie insbesondere Homogenität aus. Die Schweißnähte sind dann homogen, wenn sich die Schweißnahtdicke über die gesamte Ausdehnung der Schweißnaht überhaupt nicht oder in einem nur geringen Ausmaß ändert.

Das erfindungsgemäße Verfahren ist von seinem Prinzip her ein so genanntes "kontaktloses Verschweißen" (oder "berührungsloses Erhitzen"), da die Wärmeübertragung von den Heizelementen auf die zu verschweißenden Oberflächen der dünneren thermoplastischen Platten (auch als "Ausgangsplatten" bezeichnet) ohne direkten Kontakt zwischen Heizelement und Ausgangsplatte stattfindet. Dies hat den Vorteil, dass im erfindungsgemäßen Verfahren keine (oder nur in sehr geringem Umfang) Dellen bzw. Einfallstellen auf den Oberflächen der zu verschweißenden Ausgangsplatten gebildet werden. Diese Einfallstellen sind jedoch insbesondere in den Randbereichen der Ausgangsplatten ein generelles Problem bei Verfahren, die auf einem direkten Kontakt zwischen Heizelement und zu verschweißender Oberfläche beruhen. Solche Dellen/Einfallstellen führen zu verstärkten Inhomogenitäten in der Schweißnaht, was sich wiederum (wie nachfolgend aufgeführt) negativ auf das Brandverhalten, aber auch die Stabilität der zumindest zweilagigen thermoplastischen Platten auswirken kann.

Aufgrund der Verwendung von zumindest einem ersten Heizelement und zumindest einem zweiten Heizelement, die auf parallel zueinander versetzten Ebenen und ohne direkten Kontakt mit den zu verschweißenden Ausgangsplatten im Rahmen des erfindungsgemäßen Verfahrens eingesetzt werden, ist als weiterer Vorteil festzuhalten, dass die zu verschweißende Oberfläche der jeweiligen Ausgangsplatte in einem weit geringerem Maße einer unterschiedlichen Wärmebelastung ausgesetzt ist im Vergleich zu Verfahren gemäß dem Stand der Technik. Bei der Verwendung von nur einem Heizelement, das gegebenenfalls auch zweigeteilt sein kann, bei dem aber die einzelnen Teile auf einer Ebene geführt werden, sind im Gegensatz zum erfindungsgemäßen Verfahren die einzelnen Bereiche der jeweiligen Plattenoberfläche der zu verschweißenden Ausgangsplatten einer unterschiedlichen Wärmebelastung ausgesetzt, weil insbesondere die Randbereiche der Ausgangsplatten im Durchschnitt über eine deutlich längere Zeitspanne der entsprechenden Wärmequelle direkt oder indirekt ausgesetzt sind. Dies hat wiederum Auswirkungen auf die Homogenität der Schweißnaht.

In diesem Zusammenhang ist auch zu berücksichtigen, dass bei beweglichen Heizelementen durch die Dynamik des Ein- und Ausfahrens der Heizelemente zwischen die zu verschweißenden Ausgangsplatten kalte Luft hinter dem Heizelement hergezogen wird, während hingegen warme Luft vor dem Heizelement "aus dem Zwischenraum hinausgeschoben wird". Die auf diese Weise eintretende Pfropfenströmung oder turbulente Strömung zwischen den zu verschweißenden Platten hat wiederum negative Auswirkungen auf die Homogenität und somit Stabilität der zu bildenden Schweißnaht. Aufgrund der erfindungsgemäßen Verwendung von zwei beweglichen Heizelementen auf zueinander parallelen Ebenen wird hingegen Luft nur in einem deutlich geringerem Maße verdrängt und führt daher nicht zu einem unkontrollierten Ein- und Ausströmen von zu kalter oder heißer Luft. Insbesondere wenn im erfindungsgemäßen Verfahren zwei Heizelemente verwendet werden, die auf parallelen Ebenen aus zueinander entgegengesetzten Richtungen in den Zwischenraum zwischen den Ausgangplatten eingeführt werden, kann das Problem der Pfropfenströmung bzw. turbulenten Strömung deutlich minimiert werden und eine noch homogenere Schweißnaht zwischen den zu verschweißenden Ausgangsplatten erzielt werden. Dieser Effekt kann weiterhin verstärkt werden, wenn auch das Ausfahren der beiden Heizelemente in jeweils entgegengesetzte Richtungen erfolgt. Besonders vorteilhaft ist dabei das Einfahren und Ausfahren der einzelnen Platten ohne Richtungsänderung, weil dadurch das erfindungsgemäße Verfahren schneller durchgeführt werden kann im Vergleich zu einer Variante mit Richtungsumkehr der beiden Heizelemente beim Ausfahrschritt im Vergleich zum Einfahrschritt.

Durch die Verwendung von zumindest einem ersten Heizelement und zumindest einem zweiten Heizelement, die auf parallel zueinander versetzten Ebenen und ohne direkten Kontakt mit den zu verschweißenden Ausgangsplatten im Rahmen des erfindungsgemäßen Verfahrens eingesetzt werden, können auf die Oberflächen der beiden dünneren thermoplastischen Platten außerdem unterschiedliche Energiemengen eingebracht werden. Dies ist vorteilhaft, da durch die unterschiedlichen Energiemengen, die Stärke des Aufschmelzens der jeweiligen dünneren thermoplastischen Platte, genau vorher bestimmt werden kann und dadurch die Dicke der zwischen den beiden Ausgangsplatten gebildeten Schweißnaht genau vorhergesagt werden kann. Vorzugsweise weist die gebildete Schweißnaht eine Dicke von durchschnittlich 30 bis 500 $\mu$m auf. Der Energieeintrag auf die jeweilige Oberfläche und somit auch die Dicke der Schweißnaht kann erfindungsgemäß insbesondere durch den Abstand der Heizelemente zu den zu verschweißenden Ausgangsplatten, die Temperatur der Heizelemente sowie die Geschwindigkeit der Heizelemente mit der sie in den Zwischenraum zwischen den Ausgangsplatten ein-, sowie aus diesem ausgeführt werden, gesteuert werden. Wird beispielsweise eine drei- oder mehrlagige thermoplastische Platte hergestellt, weisen vorzugsweise alle zwischen den einzelnen Plattenpaaren gebildeten Schweißnähte eine Dicke von (durchschnittlich) 30 bis 500 $\mu$m auf, wobei die entsprechenden Dicken zwischen den einzelnen Plattenpaaren auch variieren können. Die zumindest zweilagigen thermoplastischen Platten als solche weisen weiterhin eine hohe Zugfestigkeit auf, vorzugsweise eine Zugfestigkeit von größer 0,15 N/mm$^2$.

Ein weiterer Vorteil ist im erfindungsgemäßen Verfahren darin zu sehen, dass hinsichtlich der Plattendicke der Ausgangsplatten keine Begrenzungen erforderlich sind. Im Gegensatz dazu können in Verfahren gemäß dem Stand der Technik, beispielsweise wie sie in DE-A 10 2012 204 822 offenbart sind, nur Ausgangsplatten mit einer maximalen Dicke von 80 bis 100 mm verarbeitet werden, weil aufgrund des prinzipiell V-förmigen Zuführens (und Bewegens) der Ausgangsplatten mindestens eine der Ausgangsplatten während des thermischen Verschweißens geknickt wird. Da bei diesem Verfahren ein prinzipiell starres Heizelement, insbesondere ein Heizschwert, verwendet wird, müssen die Ausgangsplatten über das Heizelement bewegt werden. Im Gegensatz dazu wird im erfindungsgemäßen Verfahren das Heizelement zwischen den - in diesem Verfahrensstadium - prinzipiell starren Ausgangsplatten bewegt. Ein Bewegen der Ausgangsplatten findet im erfindungsgemäßen Verfahren prinzipiell erst nach Entfernung der Heizelemente aus dem Plattenzwischenraum statt, wobei die zu verschweißenden Ausgangsplatten durch Bewegung von mindestens einer der Ausgangsplatten miteinander verbunden werden. Mit dem erfindungsgemäßen Verfahren lassen sich so problemlos drei- oder höherlagige thermoplastische Platten von beliebiger Dicke herstellen.

Ein weiterer Vorteil des erfindungsgemäßen Verfahrens ist darin zu sehen, dass es prinzipiell mit sehr kurzen Umstellzeiten durchgeführt werden kann. Unter "Umstellzeit" wird erfindungsgemäß die Zeit verstanden, die zwischen Erhitzen bzw. Aufschmelzen der Plattenoberflächen und dem Zusammenfügen der erhitzten bzw. aufgeschmolzenen Plattenoberflächen verstreicht. Im erfindungsgemäßen Verfahren ist dies somit die Zeitspanne, die mit dem Einführen von wenigstens zwei Heizelementen gemäß Schritt b) beginnt und mit dem Zusammenführen der entsprechenden Ausgangsplatten gemäß Schritt e) endet. Eine kurze Umstellzeit kann insbesondere aufgrund der Beweglichkeit der Heizelemente im Rahmen eines kontaktlosen Verschweißens erzielt werden.

Wie vorstehend bereits erwähnt, wirkt sich die Homogenität bzw. die Dicke der Schweißnähte zwischen den Ausgangsplatten positiv auf das Flammverhalten (verbesserter Flammschutz) des mit dem erfindungsgemäßen Verfahren erhaltenen Produktes aus. Vorzugsweise bestehen die mit dem erfindungsgemäßen Verfahren hergestellten zumindest zweilagigen thermoplastischen Platten den Brandtest B2 (gemäß DIN 4102-1: 1998-05). Dies bedeutet, dass im Rahmen der vorliegenden Erfindung der Dochteffekt, insbesondere beim Brandtest B2, vermieden werden kann, so dass in den erfindungsgemäßen zumindest zweilagigen thermoplastischen Platten die Schweißnaht der Brandprüfung gemäß Brandtest B2 standhält.

Ein besonders stabiler Zusammenhalt der einzelnen dünneren thermoplastischen Platten wird dann erzielt, wenn diese auf Temperaturen oberhalb der Glasübergangs- oder Schmelztemperatur des verwendeten Thermoplastes erhitzt werden. Vorzugsweise werden die einzelnen dünneren thermoplastischen Platten anschließend zusätzlich miteinander verpresst. Die mit dem erfindungsgemäßen Verfahren hergestellten zumindest zweilagigen thermoplastischen Platten, insbesondere diejenigen, bei denen die Oberflächen der Platten auf Temperaturen oberhalb der Glasübergangstemperatur erhitzt werden, haben als weiteren vorteilhafte Eigenschaft eine hohe Wasserdampfdurchlässigkeit und/oder Festigkeit der miteinander thermisch verschweißten Platten.

Sofern das erfindungsgemäße Verfahren unter Verwendung eines Absorbers von elektromagnetischer Strahlung durchgeführt wird, wobei der Absorber auf die entsprechenden Oberflächen der dünneren thermoplastischen Platten, die miteinander thermisch verschweißt werden, aufgetragen wird, ist ein weiterer Vorteil darin zu sehen, dass die Strahlungsdurchlässigkeit der zumindest zweilagigen thermoplastischen Platten als solche reduziert wird und/oder das Wärmeleitfähigkeitsverhalten verbessert werden kann. Die Wärmeleitfähigkeit kann um bis zu 10 % vermindert werden im Vergleich zu herkömmlichen Platten, bei denen kein Absorber von elektromagnetischer Strahlung verwendet wird. Eine Verminderung der Wärmeleitfähigkeit bedeutet ein (Wärme-) Dämmungseffekt.

Nachfolgend wird das erfindungsgemäße Verfahren zur Herstellung einer zumindest zweilagigen thermoplastischen Schaumstoffplatte näher definiert.

Die mit dem erfindungsgemäßen Verfahren hergestellte thermoplastische Platte ist zumindest zweilagig, sie kann also genau zwei Lagen aufweisen oder dreilagig, vierlagig, fünflagig oder noch höherlagig sein. Wie vorstehend bereits ausgeführt, ergibt sich die Anzahl der Lagen der thermoplastischen Platte als solche aus der Anzahl der dünneren thermoplastischen Platten, die miteinander thermisch verschweißt werden. Die dünneren thermoplastischen Platten werden auch als Ausgangsplatten bezeichnet. Im Falle einer zweilagigen thermoplastischen Platte als solche, werden also zwei dünnere thermoplastische Platten, eine erste dünnere thermoplastische Platte und eine zweite dünnere thermoplastische Platte, miteinander thermisch verschweißt. Bei einer drei- oder vierlagigen thermoplastischen Platten als solche, werden somit drei- bzw. vier dünnere thermoplastische Platten miteinander thermisch verschweißt. Dabei ist es egal, ob zunächst zwei erste dünnere thermoplastische Platten miteinander verschweißt werden und anschließend eine zweite dünnere thermoplastische Platte oder ob beispielsweise eine erste dünnere thermoplastische Platte mit einer zweiten dünneren thermoplastischen Platte verschweißt wird und anschließend die so erhaltene zweilagige thermoplastische Platte mit der Seite der zweiten dünneren thermoplastischen Platte auf eine weitere erste dünnere thermoplastische Platte verschweißt wird. Wird die erste dünnere thermoplastische Platte beispielsweise mit A bezeichnet und die zweite dünnere thermoplastische Platte mit B, kann eine beispielsweise dreilagige thermoplastische Platte also entweder die Stapelfolge AAB haben oder ABA oder BBA oder BAB.

Sofern noch höherlagige thermoplastische Platten als solche hergestellt werden sollen, beispielsweise eine zehnlagige thermoplastische Platte, müssen demzufolge die der Anzahl der Lagen entsprechende Anzahl an dünneren thermoplastischen Platten, beispielsweise zehn dünnere thermoplastische Platten, miteinander verschweißt werden. Vorzugsweise ist die erfindungsgemäße thermoplastische Platte zweilagig, dreilagig oder vierlagig, insbesondere ist die erfindungsgemäße thermoplastische Platte zweilagig. Das thermische Verschweißen als solches (Durchführung) wird weiter unten im Text im Zusammenhang mit dem erfindungsgemäßen Herstellungsverfahren näher definiert.

Die zum thermischen Verschweißen verwendeten dünneren thermoplastischen Platten entsprechen hinsichtlich ihrer chemischen Zusammensetzung den im Rahmen der vorliegenden Erfindung hergestellten zumindest zweilagigen thermoplastischen Platten als solche (ohne Berücksichtigung der im Rahmen des Verschweißungsvorgangs optional auf die Oberflächen aufgebrachten Komponenten, die Absorber von elektromagnetischer Strahlung oder Flammschutzmittel bzw. ohne Berücksichtigung der in Folge der Ausbildung der Schweißnaht an den entsprechenden Oberflächen auftretenden chemischen Veränderungen/Reaktionen). Die jeweils thermisch miteinander zu verschweißenden dünneren thermoplastischen Platten weisen vorzugsweise dieselben Dimensionen auf. In einer Ausführungsform weisen sie außerdem dieselbe chemische Zusammensetzung auf, allerdings unterschiedliche Dichten. Gegebenenfalls können auch dünnere thermoplastische Platten mit unterschiedlichen Dimensionen und/oder unterschiedlicher chemischer Zusammensetzung miteinander thermisch verschweißt werden.

Die Dimensionierung der thermisch miteinander zu verschweißenden dünneren thermoplastischen Platten ist beliebig. Hinsichtlich ihrer Länge und Breite können sie Maße im Zentimeterbereich bis hin zu mehreren Metern aufweisen. Hinsichtlich ihrer dritten Dimension (Dicke) sind theoretisch ebenfalls beliebige Maße denkbar. In der Praxis weisen die dünneren thermoplastischen Platten eine Dicke im Bereich von 10 bis 300 mm auf.

Bezogen auf ein rechtwinkliges Koordinatensystem wird erfindungsgemäß die Länge einer Ausgangsplatte bzw. einer zumindest zweilagigen thermoplastischen Platte als solche auch als "x-Richtung" bezeichnet, die entsprechende breite als "y-Richtung" und die Dicke als "z-Richtung". Die Dicke der zumindest zweilagigen thermoplastischen Platte steigt mit zunehmender Anzahl von Verschweißungsschritten kontinuierlich an.

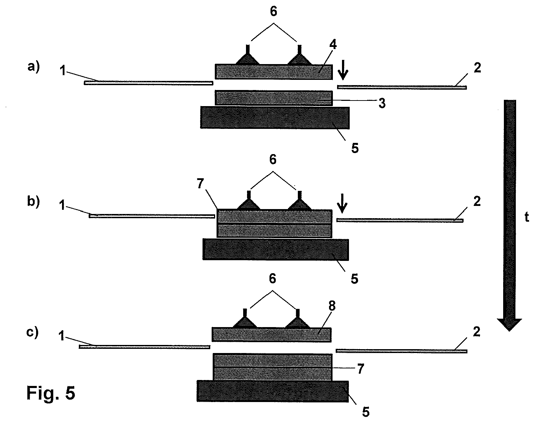

In Figur 5c ist der Fall dargestellt, dass eine dreilagige thermoplastische Platte durch Verschweißen von beispielsweise einer ersten dünneren thermoplastischen Platte 8 mit einer bereits zweilagigen thermoplastischen Platte 7, die für sich wiederum eine Ausgangsplatte bezüglich der zu erzielenden dreilagigen thermoplastischen Platte ist, hergestellt wird. Die zweilagige thermoplastische Platte 7 wird hergestellt durch Verschweißen einer ersten dünneren thermoplastischen Platte 4 mit einer zweiten dünneren thermoplastischen Platte 3 (Figur 5a und Figur 5b). Die vorstehend bzw. nachfolgend angegebenen Werte hinsichtlich der Dicke der dünneren thermoplastischen Platten beziehen sich auf die entsprechenden Werte einer Ausgangsplatte, die für sich genommen noch keinen thermischen Verschweißungsschritt erfahren hat. Sofern eine zwei- oder höherlagige thermoplastische als Ausgangsplatte für einen Weiterverschweißungsschritt im Sinne von Figur 5c eingesetzt werden soll, sind die Dicken der entsprechenden zwei- oder höherlagigen Ausgangsplatten entsprechend höher.

Die Dicke der im erfindungsgemäßen Verfahren hergestellten zumindest zweilagigen thermoplastischen Platten ergibt sich somit aus der Gesamtdicke der insgesamt eingesetzten dünneren thermoplastischen Platten (Ausgangsplatten). Aufgrund des thermischen Verschweißens werden die jeweils miteinander zu verschweißenden Oberflächen der Ausgangsplatten zumindest etwas auf- oder angeschmolzen (Aufschmelzschritt), was in Abhängigkeit von den übertragenen Energiemengen (E1) und (E2) zu einer gewissen Reduzierung der Dicke der jeweiligen Ausgangsplatten führen kann. An den Stellen, an denen die Ausgangsplatten miteinander thermisch verschweißt werden, bildet sich eine Schweißnaht aus. Insbesondere wenn im Rahmen des Herstellungsverfahrens ein Verpressungs- und/oder Aufschmelzschritt mit der Übertragung einer großen Energiemenge (E1) und/oder (E2) durchgeführt wird, ist die Dicke der zumindest zweilagigen thermoplastischen Platte als solche geringer als die Summe der jeweiligen Dicken der eingesetzten ersten dünneren thermoplastischen Platte und der zweiten dünneren thermoplastischen Platte.

Beispielsweise weist die erste dünnere thermoplastische Platte in Schritt a) eine Länge (x-Richtung) von 500 bis 2800 mm, vorzugsweise von 1000 bis 1500 mm, eine Breite (y-Richtung) von 500 bis 1250 mm, vorzugsweise von 500 bis 900 mm und eine Dicke (z-Richtung) von 20 bis 200 mm, vorzugsweise von 50 bis 100 mm, auf.

Die zweite dünnere thermoplastische Platte in Schritt a) weist beispielsweise eine Länge (x-Richtung) von 5 bis 2800 mm, vorzugsweise von 1000 bis 1500 mm, eine Breite (y-Richtung) von 500 bis 1250 mm, vorzugsweise von 500 bis 900 mm und eine Dicke (z-Richtung) von 20 bis 200 mm, vorzugsweise von 50 bis 100 mm, auf.

Die zum Verschweißen eingesetzten dünneren thermoplastischen Platten als solche sind dem Fachmann prinzipiell bekannt. Geeignete thermoplastische Platten sind beispielsweise in Form von Blends in der WO 2009/047487 offenbart. Beispielsweise können Platten aus amorphen, kristallinen oder teilkristallinen thermoplastischen Schaumstoffen eingesetzt werden.

Beispielsweise ist die erste dünnere thermoplastische Platte eine Schaumstoffplatte auf Basis eines Polymers, ausgewählt aus der Gruppe bestehend aus Polystyrol, Polystyrolcopolymeren, Polyethersulfon, Polysulfon, Polyethylenterephthalat, Polyurethan, Polyolefinen, Polyolefincopolymeren und Acrylpolymeren. Polyolefine sind beispielsweise Polyethylen und/oder Polypropylen. Vorzugsweise ist die erste dünnere thermoplastische Platte ein Extrusionsschaumstoff oder ein Partikelschaumstoff, mehr bevorzugt ein Extrusionsschaumstoff auf Basis eines Polymers, ausgewählt aus der Gruppe bestehend aus Polystyrol, Polystyrolcopolymeren, Polyethersulfon, Polysulfon, thermoplastischen Polyurethan und Polyethylenterephthalat. Am meisten bevorzugt ist die erste dünnere thermoplastische Platte ein Extrusionsschaumstoff auf Basis eines Polymers, ausgewählt aus der Gruppe bestehend aus Polystyrol, Polystyrolcopolymeren und Polyethylenterephthalat.

Die zweite dünnere thermoplastische Platte ist beispielsweise ein thermoplastisches Polymer, ausgewählt aus der Gruppe bestehend aus Polystyrol, Polystyrolcopolymeren, Polyethersulfon, Polysulfon, Polyethylenterephthalat, Polyurethan, Polyolefinen, Polyolefincopolymeren und Acrylpolymeren. Vorzugsweise ist die zweite dünnere thermoplastische Platte ein Schaumstoff auf Basis eines thermoplastischen Polymers, ausgewählt aus der Gruppe bestehend aus Polystyrol, Polystyrolcopolymeren, Polyethersulfon, Polysulfon, Polyethylenterephthalat, Polyurethan, Polyolefinen, Polyolefincopolymeren und Acrylpolymeren. Mehr bevorzugt ist die zweite dünnere thermoplastische Platte ein Extrusionsschaumstoff oder ein Partikelschaumstoff, insbesondere bevorzugt ein Extrusionsschaustoff auf Basis eines Polymers, ausgewählt aus der Gruppe bestehend aus Polystyrol, Polystyrolcopolymeren, Polyethersulfon, Polysulfon, thermoplastischem Polyurethan und Polyethylenterephthalat. Am meisten bevorzugt ist die zweite dünnere thermoplastische Platte ein Extrusionsschaumstoff auf Basis eines Polymers, ausgewählt aus der Gruppe bestehend aus Polystyrol, Polystyrolcopolymeren und Polyethylenterephthalat.

Polystyrolcopolymere werden auch als aus Styrol hergestellte Copolymere oder als Styrolcopolymerisate bezeichnet. Ist das Polymer auf Basis eines Polystyrolcopolymers, bedeutet dies, dass zur Herstellung diese Copolymers neben dem monomeren Styrol mindestens ein weiteres Monomer erforderlich ist. Vorzugsweise wird dieses Copolymer aus Styrol und einem weiteren Monomer hergestellt. Als Comonomere zu Styrol eignen sich prinzipiell alle mit Styrol polymerisierbaren Monomere. Vorzugsweise sind mindestens 50 Gew.-% Styrol in diesem Copolymer polymerisiert, bezogen auf das Gesamtgewicht des Copolymers.

Vorzugsweise weist ein aus Styrol hergestelltes Copolymer als Comonomer zu Styrol ein Monomer auf, das ausgewählt ist aus $\alpha$-Methylstyrol, kernhalogeniertem Styrol, kernalkylierten Styrolen, Acrylnitril, Acrylsäureester, Methacrylsäureester, N-Vinylverbindungen, Maleinsäureanhydrid, Butadien, Divinylbenzol und Butandioldiacrylat. Acrylsäureester sowie Methacrylsäureester sind vorzugsweise erhältlich aus Alkoholen mit ein bis acht Kohlenstoffatomen, eine geeignete N-Vinylverbindung ist beispielsweise Vinylcarbazol, bevorzugte aus Styrol hergestellte Copolymere sind Styrol-Acrylnitril-Copolymere (SAN) oder Acrylnitril-Butadien-Styrol-Copolymere (ABS).

Erfindungsgemäß weist die erste dünnere thermoplastische Platte eine Dichte (D1) auf, die zweite dünnere thermoplastische Platte eine Dichte (D2), wobei die Dichte (D1) der ersten dünneren thermoplastischen Platten kleiner ist als die Dichte (D2) der zweiten dünneren thermoplastischen Platte. Dem Fachmann ist klar, dass die Dichte der beiden dünneren thermoplastischen Platten durch das Herstellungsverfahren beeinflusst werden kann. Beispielsweise kann die Dichte beeinflusst werden durch die Menge an Treibmittel, die bei der Herstellung der dünneren thermoplastischen Platten, bevorzugt der dünneren thermoplastischen Schaumstoffplatten, eingesetzt wird. In Abhängigkeit vom Herstellungsverfahren kann daher eine erste dünnere thermoplastische Platte, die aus beispielsweise Polystyrol hergestellt worden ist, eine andere Dichte aufweisen als die zweite dünnere thermoplastische Platte, die beispielsweise ebenfalls aus Polystyrol hergestellt worden ist.

Die Dichte (D1) der ersten dünneren thermoplastischen Platte liegt beispielsweise im Bereich von 10 bis 70 g/l, vorzugsweise im Bereich von 10 bis 50 g/l und insbesondere bevorzugt im Bereich von 10 bis 30 g/l. Verfahren zur Bestimmung der Dichte (D1) der ersten dünneren thermoplastischen Platte sind dem Fachmann als solche bekannt, üblicherweise erfolgt die Bestimmung der Dichte nach DIN EN 1602, Stand 2013.

Die Dichte (D2) der zweiten dünneren thermoplastischen Platte liegt beispielsweise im Bereich von 15 bis 100 g/l, vorzugsweise im Bereich von 20 bis 100 g/l und insbesondere bevorzugt im Bereich von 25 bis 75 g/l. Verfahren zur Bestimmung der Dichte (D2) der zweiten dünneren thermoplastischen Platte sind dem Fachmann als solche bekannt, üblicherweise erfolgt die Bestimmung der Dichte nach DIN EN 1602, Stand 2013.

Es versteht sich von selbst, dass im Fall von Bereichsüberlagerungen die entsprechenden Dichtewerte so gewählt wurden, dass die Dichte (D1) der ersten dünneren thermoplastischen Platte kleiner ist als die Dichte (D2) der zweiten dünneren thermoplastischen Platte.

Die Dichte (D1) ist im Allgemeinen um mindestens 1 g/l geringer als die Dichte (D2), vorzugsweise um mindestens 2 g/l und insbesondere bevorzugt um mindestens 5 g/l.

Üblicherweise ist die Dichte (D1) um höchstens 40 g/l geringer als die Dichte (D2), vorzugsweise um höchstens 30 g/l und insbesondere bevorzugt um höchstens 20 g/l.

Die Durchführung des thermischen Verschweißens als solches ist dem Fachmann bekannt. Der Effekt des thermischen Verschweißens wird bei den zu verschweißenden Oberflächen erfindungsgemäß dadurch erzielt, dass die jeweiligen Oberflächen der Ausgangsplatten einer Wärmequelle ausgesetzt werden. Im erfindungsgemäßen Verfahren stellen das zumindest eine erste Heizelement und das zumindest eine zweite Heizelement, die auf parallel zueinander versetzten Ebenen parallel zu den beiden dünneren thermoplastischen Platten in den Zwischenraum zwischen die beiden dünneren thermoplastischen Platten eingeführt werden, die Wärmequelle dar.

Durch das thermische Verschweißen bildet sich zwischen den zu verschweißenden Oberflächen (der Ausgangsplatten) eine Schweißnaht aus. Anstelle des Begriffs "Schweißnaht" können auch die Begriffe "Schweißhaut" oder "Schweißzone" verwendet werden. Bei dem zu verschweißenden Ausgangsplattenpaar wird beim thermischen Verschweißen zwischen den miteinander in Kontakt gebrachten Oberflächen der beiden Ausgangsplatten eine Schweißnaht ausgebildet. Wird beispielsweise eine dreilagige thermoplastische Platte hergestellt, so werden drei dünnere thermoplastische Platten (Ausgangsplatten) eingesetzt und somit zwei Schweißnähte ausgebildet. Bevorzugt weist mindestens eine Schweißnaht eine Dicke von 30 bis 500 $\mu$m auf, vorzugsweise weist jede Schweißnaht eine Dicke von 30 bis 500 $\mu$m auf. Insbesondere hat jede Schweißnaht die gleiche Dicke (beispielsweise 300 $\mu$m). Beispielsweise weist die durch das thermische Verschweißen ausgebildete Schweißnaht eine Dicke von 30 bis 500 $\mu$m, vorzugsweise von 50 bis 300 $\mu$m, mehr bevorzugt von 70 bis 200 $\mu$m und am meisten bevorzugt von 80 bis 150 $\mu$m auf.

Die im Rahmen der vorliegenden Erfindung für die Dicke einer Schweißnaht aufgeführten Zahlenwerte sind als Durchschnittswert zu verstehen, wobei vorzugsweise zur Ermittlung eines solchen Durchschnittwertes 5 Messpunkte, die über die gesamte Länge der Schweißnaht verteilt sind und die durch Lichtmikroskopie bestimmt werden, herangezogen werden. Erfindungsgemäß erstrecken sich die vorgenannten Werte hinsichtlich der Schweißnahtdicke über den kompletten Umfang der Schweißnaht.

Die erfindungsgemäßen thermoplastischen Platten bzw. die entsprechenden Ausgangsplatten können beliebige Werte hinsichtlich ihrer Zellgröße und/oder mittleren Zellenzahl aufweisen. Die jeweiligen Werte der Ausgangsplatten finden sich auch in den erfindungsgemäßen thermoplastischen Platten wieder, das heißt, sie werden durch das thermische Verschweißen nicht verändert. Allerdings ist es bevorzugt, dass die Zellgröße der zumindest zweilagigen thermoplastischen Platte kleiner als 200 $\mu$m, vorzugsweise kleiner als 100 $\mu$m ist und/oder die mittlere Zellzahl größer ist als 6 Zellen/mm betragen. Während Ausgangsplatten mit einer mittleren Zellgröße von 200 $\mu$m und größer eine erhöhte Oberflächenrauhigkeit und grobe Zellstruktur aufweisen, haben insbesondere Ausgangsplatten mit einer mittleren Zellgröße < 150 $\mu$m, vorzugsweise < 100 $\mu$m, eine sehr feine Struktur und glatte Oberfläche, was sich positiv auf das Bestehen von Brandtests und auf das Wärmeisolationsvermögen auswirkt. Üblicherweise liegen die Zellgrößen der Ausgangsplatten im Bereich von 50 bis 200 $\mu$m, wobei die Zellen der zweiten dünneren thermoplastischen Platte geringere Zellgrößen aufweisen als die Zellen der ersten dünneren thermoplastischen Platte.

In Schritt a) des erfindungsgemäßen Verfahrens werden die erste dünnere thermoplastische Platte und die zweite dünnere thermoplastische Platten in einem Abstand (a) parallel zueinander ausgerichtet, so dass sie einen Zwischenraum ausbilden.

Der Abstand (a) ist dabei so gewählt, dass mindestens zwei Heizelemente zwischen den entsprechenden Ausgangsplatten in parallel zueinander versetzten Ebenen so bewegt werden können, dass sie die entsprechenden Ausgangsplatten nicht berühren (siehe auch Ausführungen zum nachfolgenden Schritt b)). Dabei weisen die Heizelemente auch einen gewissen Abstand zueinander auf, um ein reibungsloses Ein- und Ausführen der Heizelemente zu gewährleisten. Der Abstand (a) ist umso größer, je höher die Anzahl an Heizelementen im erfindungsgemäßen Verfahren ist, die auf parallel zueinander versetzten Ebenen in den Zwischenraum ein- und aus diesem ausgeführt werden.

Vorzugsweise beträgt in Schritt a) der Abstand (a) zwischen der ersten dünneren thermoplastischen Platte und der zweiten dünneren thermoplastischen Platte 10 bis 150 mm, vorzugsweise 15 bis 80 mm.

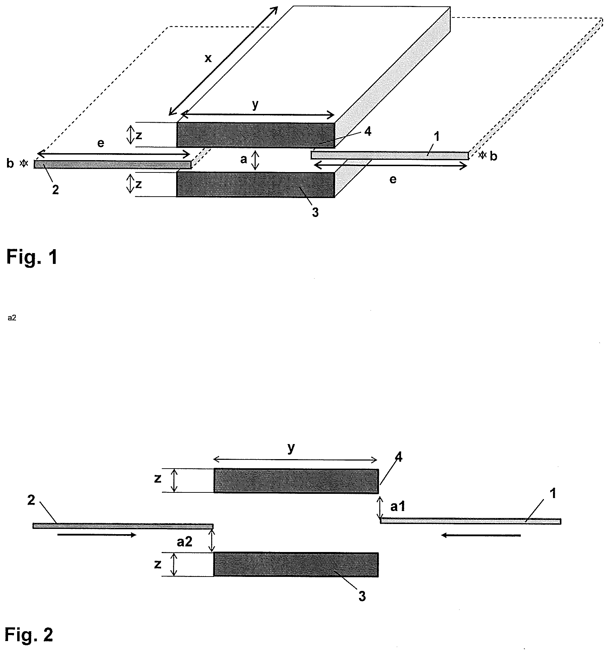

In Figur 1 ist die parallele Ausrichtung der Ausgangsplatten gemäß Schritt a) anschaulich dargestellt. Die erste dünnere thermoplastische Platte ist durch das Bezugszeichen "4" dargestellt, die zweite dünnere thermoplastische Platte durch das Bezugszeichen "3". "x" stellt die jeweilige Länge der Ausgangsplatte (vorzugsweise 800 bis 2800 mm) dar, "y" steht für die Breite der Ausgangsplatten (vorzugsweise 500 bis 1250 mm) und "z" steht für die Dicke der Ausgangsplatten (vorzugweise 50 bis 100 mm). Es versteht sich von selbst, dass die Länge, die Breite und die Dicke der beiden Ausgangsplatten unterschiedlich sein können. Die beiden Ausgangsplatten 3 und 4 sind parallel im Abstand (a) zueinander ausgerichtet, der vorzugsweise 10 bis 150 mm beträgt.

In Schritt b) des erfindungsgemäßen Verfahrens werden in den Zwischenraum parallel zu den beiden dünneren thermoplastischen Platten zumindest ein erstes Heizelement und zumindest ein zweites Heizelement auf parallel zueinander versetzten Ebenen eingeführt, wobei sich die Oberflächen der dünneren thermoplastischen Platten und die Oberflächen der Heizelemente nicht berühren und wobei das erste Heizelement einen Abstand (a1) zu der ersten dünneren thermoplastischen Platte aufweist und das zweite Heizelement einen Abstand (a2) zu der zweiten dünneren thermoplastischen Platte aufweist.

Als Heizelemente können erfindungsgemäß alle dem Fachmann bekannten Heizelemente eingesetzt werden, die beweglich sind und ein kontaktloses Verschweißen im Sinne der vorliegenden Erfindung ermöglichen. Vorzugsweise wird erfindungsgemäß genau ein erstes Heizelement und genau ein zweites Heizelement verwendet. Es werden also genau zwei Heizelemente verwendet. Weiterhin ist es bevorzugt, dass die Heizelemente Heizplatten sind. Sofern mehr als zwei Heizelemente verwendet werden, ist es bevorzugt, dass eine gerade Anzahl von Heizelementen auf parallel zueinander versetzten Ebenen eingesetzt wird. Dabei ist vorzugsweise die Zahl der ersten Heizelemente gleich der Zahl der zweiten Heizelemente. Bevorzugt als Heizelemente sind indirekt mittels IR-Strahler aufgeheizte Heizplatten mit einer Oberflächentemperatur im Bereich von 200 bis 700 °C, insbesondere im Bereich von 300 bis 500 °C. Die Heizelemente können beispielsweise auch in der Außenposition (Ruheposition) durch IR-Strahler oder mittels Induktionserwärmung vorgeheizt werden. Alternativ ist die Erwärmung durch elektrische Widerstandsheizung oder mittels Wärmeträgerölen möglich.

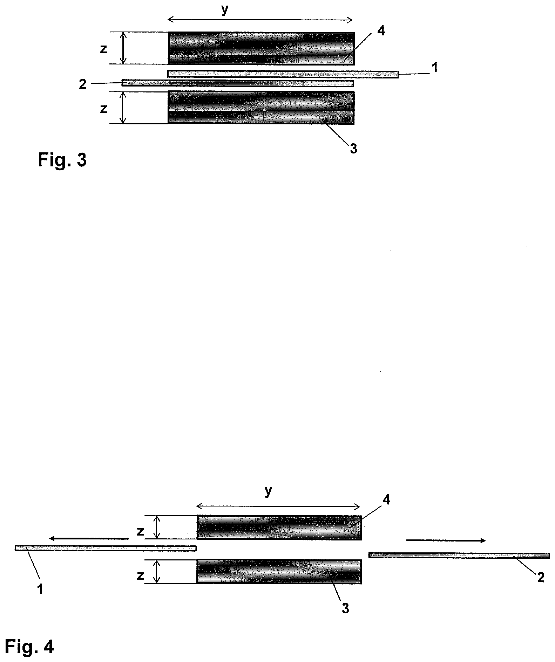

In Figur 2 ist eine solche Außenposition (Ruheposition oder Parkposition) für das erste Heizelement 1 und das zweite Heizelement 2 bildhaft dargestellt. Als Außenposition werden also die Positionierungen der Heizelemente aufgefasst, die sich außerhalb des im vorstehenden Schritt a) definierten Zwischenraums zwischen den beiden Ausgangsplatten befinden. Wie aus Figur 2 ersichtlich, werden die beiden Heizelemente 1 und 2, vorzugsweise Heizplatten, in Pfeilrichtung in besagten Zwischenraum zwischen den Ausgangsplatten eingeführt (siehe auch Figur 3 bzw. Figur 1).

Vorzugsweise werden erfindungsgemäß zwei identische Heizelemente, insbesondere Heizplatten, verwendet, gegebenenfalls können die Heizelemente auch hinsichtlich ihrer Beschaffenheit, insbesondere ihrer Dicke, unterschiedlich geartet sein. Die Dimensionen der Heizelemente werden in Abstimmung mit den entsprechenden Dimensionen der zu verschweißenden Ausgangsplatten gewählt. Prinzipiell können die Heizelemente sowohl hinsichtlich ihrer Länge (x-Richtung), ihrer Breite (y-Richtung) als auch ihrer Dicke (z-Richtung) jeweils größer und/oder kleiner als die entsprechenden Dimensionierungen der zu verschweißenden Ausgangsplatten sein.

Bevorzugt ist, dass das erste Heizelement in seiner Länge (x-Richtung) gleich groß oder maximal 10 % größer ist als die Länge (x-Richtung) der erste dünneren thermoplastischen Platte und das erste Heizelement in seiner Breite (y-Richtung) 30 bis 120 %, vorzugsweise 60 bis 110 % der Breite (y-Richtung der ersten dünneren thermoplastischen Platte beträgt. Das zweite Heizelement ist in seiner Länge (x-Richtung) gleich groß oder maximal 10 % größer als die Länge (x-Richtung) der zweiten dünneren thermoplastischen Platte und das zweite Heizelement beträgt in seiner Breite (y-Richtung) 30 bis 120 %, vorzugsweise 60 bis 110 % der Breite (y-Richtung) der zweiten dünneren thermoplastischen Platte.

In Figur 1 ist die Breite eines Heizelementes mit e dargestellt, die beispielsweise 50 bis 1400 mm betragen kann. Die Dicke eines Heizelements ist in Figur 1 dargestellt, vorzugsweise beträgt die Dicke beider Heizplatten 1 und 2 5 bis 50 mm.

Der Abstand (a1) zwischen dem ersten Heizelement und der ersten dünneren thermoplastischen Platte liegt üblicherweise im Bereich von 0,5 bis 10 mm, vorzugsweise im Bereich von 1,0 bis 7,5 mm, mehr bevorzugt im Bereich von 1 bis 5 mm. Der Abstand (a2) zwischen dem zweiten Heizelement und der zweiten dünneren thermoplastischen Platte liegt üblicherweise im Bereich von 0,2 bis 7,5 mm, vorzugsweise im Bereich von 0,4 bis 5,0 mm, mehr bevorzugt im Bereich von 0,4 bis 3,0 mm.

Der Abstand (a1) ist im Allgemeinen um mindestens 0,2 mm, bevorzugt 0,6 mm größer als der Abstand (a2).

Der Abstand (a1) ist im Allgemeinen um höchstens maximal 5 mm, bevorzugt um höchstens 2 mm größer als der Abstand (a2).

Es versteht sich von selbst, dass der Abstand (a1) der ersten dünneren thermoplastischen Platte und dem ersten Heizelement größer ist als der Abstand (a2) zwischen der zweiten dünneren thermoplastischen Platte und dem zweiten Heizelement.

In Schritt c) des erfindungsgemäßen Verfahrens werden die Heizelemente soweit zwischen die beiden dünneren thermoplastischen Platten eingeführt, bis zwischen den beiden dünneren thermoplastischen Platten, bezogen auf jede Stelle der Oberfläche der ersten dünneren thermoplastischen Platte, zumindest zeitweise sich das erste Heizelement befunden hat und bis zwischen den beiden dünneren thermoplastischen Platten, bezogen auf jede Stelle der Oberfläche der zweiten dünneren thermoplastischen Platten, zumindest zeitweise sich das zweite Heizelement befunden hat. Dabei überträgt das erste Heizelement eine Energiemenge (E1) auf die Oberfläche der ersten dünneren thermoplastischen Platte und das zweite Heizelement überträgt eine Energiemenge (E2) auf die Oberfläche der zweiten dünneren thermoplastischen Platte. Die Energiemenge (E1), die das erste Heizelement auf die Oberfläche der ersten dünneren thermoplastischen Platte überträgt, ist kleiner als die Energiemenge (E2), die das zweite Heizelement auf die Oberfläche der zweiten dünneren thermoplastischen Platte überträgt.

Vorzugsweise werden die Heizelemente, wenn sie in den Zwischenraum eingeführt worden sind, für eine Zeit im Bereich von 0,2 bis 10 Sekunden, vorzugsweise im Bereich von 0,5 bis 7,5 Sekunden und insbesondere bevorzugt im Bereich von 1,0 bis 4,0 Sekunden angehalten.

Schritt c) ist bildlich in Figur 3 dargestellt. Wie aus Figur 3 ersichtlich, ist jede Stelle (Punkt oder Bereich) der jeweiligen Oberfläche der jeweiligen Ausgangsplatten 3 und 4 benachbart zu dem jeweiligen Heizelement 1 und 2. Mit anderen Worten ausgedrückt, befindet sich an jeder Stelle der Oberfläche der ersten dünneren thermoplastischen Platte 4 das erste Heizelement 1 und an jeder Stelle der Oberfläche der zweiten dünneren thermoplastischen Platte 3 sich das zweite Heizelement 2.

Die Energiemenge (E1), die das erste Heizelement auf die erste dünnere thermoplastische Platte überträgt, wird vorzugsweise eingestellt durch den Abstand (a1) zwischen dem ersten Heizelement und der ersten dünneren thermoplastischen Platte.

Für den Abstand (a1) zwischen dem ersten Heizelement und der ersten dünneren thermoplastischen Platte gelten die zuvor beschriebenen Ausführungen und Bevorzugungen.

Die Energiemenge (E2), die das zweite Heizelement auf die zweite dünnere thermoplastische Platte überträgt, wird vorzugsweise eingestellt durch den Abstand (a2) zwischen dem zweiten Heizelement und der zweiten dünneren thermoplastischen Platte.

Für den Abstand (a2) zwischen dem zweiten Heizelement und der zweiten dünneren thermoplastischen Platte gelten die zuvor beschriebenen Ausführungen und Bevorzugungen.

Es ist weiterhin bevorzugt, dass die Energiemenge (E1), die das erste Heizelement auf die erste dünnere thermoplastische Platte überträgt, eingestellt wird durch die Temperatur (T1) des ersten Heizelements.

Außerdem ist es bevorzugt, dass die Energiemenge (E2), die das zweite Heizelement auf die zweite dünnere thermoplastische Platte überträgt, eingestellt wird durch die Temperatur (T2) des zweiten Heizelements.

Durch die Energiemenge (E1), die auf die Oberfläche der ersten dünneren thermoplastischen Platte übertragen wird, wird die Oberfläche der ersten thermoplastischen Platte aufgeschmolzen. Durch die Energiemenge (E2), die auf die Oberfläche der zweiten dünneren thermoplastischen Platte übertragen wird, wird die Oberfläche der zweiten dünneren thermoplastischen Platte aufgeschmolzen. Die zum Aufschmelzen benötigte Energiemengen (E1) und (E2) sind proportional zur Dichte sowie zur Wärmekapazität der entsprechenden ersten dünneren thermoplastischen Platte und der zweiten dünneren thermoplastischen Platte. Es gelten die folgenden Formeln:

$$E1 = c_{p1} \cdot \Delta T1 \cdot D1 \cdot A1 \cdot \Delta s1 = c_{p1} \cdot \Delta T1 \cdot D1 \cdot \Delta V1$$

$$E2 = c_{p2} \cdot \Delta T2 \cdot D2 \cdot A2 \cdot \Delta s2 = c_{p2} \cdot \Delta T2 \cdot D2 \cdot \Delta V2$$

$c_{p1}$ und $c_{p2}$ ist die Wärmekapazität der ersten dünneren thermoplastischen Platte und der zweiten dünneren thermoplastischen Platte. Verfahren zur Bestimmung der Wärmekapazität der jeweiligen dünneren thermoplastischen Platte sind dem Fachmann als solche bekannt, üblicherweise wird die Wärmekapazität nach DIN EN ISO 11357-4: 2014-10 bestimmt.

$\Delta T1$ und $\Delta T2$ ist die Temperatur, um die die Oberfläche der ersten dünneren thermoplastische Platte und die Oberfläche der zweiten dünneren thermoplastischen Platte erwärmt werden muss, damit die Platten verschweißt werden können.

A1 und A2 gibt die Fläche der Oberfläche der ersten dünneren thermoplastischen Platte und die Fläche der Oberfläche der zweiten dünneren thermoplastischen Platte an. Sie entspricht also der Länge der jeweiligen dünneren thermoplastischen Platten mal der Breite der zweiten dünneren thermoplastischen Platte.

$\Delta s1$ und $\Delta s2$ gibt die Dicke der Schicht der ersten dünneren thermoplastischen Platte und der zweiten dünneren thermoplastischen Platte an, die erwärmt werden soll, die also aufgeschmolzen werden soll.

D1 und D2 ist die Dichte der ersten dünneren thermoplastischen Platte und der zweiten dünneren thermoplastischen Platte.

Die Energiemenge (E1) und (E2), die vom ersten Heizelement auf die Oberfläche der ersten dünneren thermoplastischen Platte übertragen wird, beziehungsweise vom zweiten Heizelement auf die zweite dünnere thermoplastischen Platte, kann durch die folgende Formel bestimmt werden:

$$E1 = \lambda 1 \cdot A1 \cdot (T1 - T_{01}) \, / \, a1 \cdot t1$$

$$E2 = \lambda 2 \cdot A2 \cdot (T1 - T_{02}) \, / \, a2 \cdot t2$$

$\lambda 1$ und $\lambda 2$ gibt die Wärmeleitung des Gases, vorzugsweise der Luft, im Zwischenraum zwischen dem ersten Heizelement und der ersten dünneren thermoplastischen Platte, beziehungsweise zwischen dem zweiten Heizelement und der zweiten dünneren thermoplastischen Platte an. Die Wärmeleitung kann nach DIN EN ISO 22007-1: 2012-04 bestimmt werden.

T1 bzw. T2 gibt die Temperatur des ersten Heizelements beziehungsweise des zweiten Heizelements an.

$T_{01}$ und $T_{02}$ gibt die Temperatur der ersten dünneren thermoplastischen Platte beziehungsweise der zweiten dünneren thermoplastischen Platte an.

a1 und a2 gibt den Abstand zwischen dem ersten Heizelement und der ersten dünneren thermoplastischen Platte und den Abstand zwischen dem zweiten Heizelement und der zweiten dünneren thermoplastischen Platte an.

t1 und t2 gibt die Zeit, für die das erste Heizelement die Energiemenge (E1) auf die erste dünnere thermoplastische Platte überträgt, bzw. die Zeit, für die das zweite Heizelement die Energiemenge (E2) auf die zweite dünnere thermoplastische Platte überträgt, an. Vorzugsweise ist im erfindungsgemäßen Verfahren t1 = t2.

In Schritt d) werden die Heizelemente vollständig aus dem Zwischenraum entfernt. Dies ist bildlich in Figur 4 dargestellt. Erfindungsgemäß erfolgt das Entfernen der Heizelemente vorzugsweise in der gleichen Richtung wie das Einführen der Heizelemente in Schritt b). Wie aus der zweidimensionalen Darstellung gemäß den Figuren 2 bis 4 ersichtlich, wird das erste Heizelement 1 von rechts nach links durch den Zwischenraum zwischen den beiden Ausgangsplatten geführt, während das zweite Heizelement 2 in genau entgegengesetzter Richtung von links nach rechts durchgeführt wird.

In Schritt e) wird mindestens eine der beiden dünneren thermoplastischen Platten gegen die Oberfläche der jeweiligen anderen dünneren thermoplastischen Platte gedrückt.

Dieser Schritt wird nachfolgend für die horizontale Anordnung der beiden dünneren thermoplastischen Platten erläutert. Die Ausführung gilt sinngemäß auch für die vertikale Ausrichtung der beiden dünneren thermoplastischen Platten. Die vertikale Ausrichtung der beiden dünneren thermoplastischen Platten ist bevorzugt.

Es ist möglich, dass nur eine der beiden Ausgangsplatten gegen die jeweils andere Ausgangsplatte gedrückt wird. Dies ist bildhaft in Figur 5a und 5b dargestellt. Bei einer, bezogen auf die Räumlichkeit, horizontalen Anordnung der Ausgangsplatten (wie sie in den Figuren 2 bis 5 dargestellt sind) ist es bevorzugt, dass die, räumlich gesehen, obere Ausgangsplatte 4 (erste dünnere thermoplastische Platte) gegen die untere Ausgangsplatte 3 (zweite dünnere thermoplastische Platte) gedrückt wird. Vorzugsweise werden beide Ausgangsplatten in Schritt e) gegeneinander gedrückt, also solange aufeinander zu bewegt, bis der Abstand (a) gleich null ist.

Dies erfolgt vorzugsweise unter Verwendung einer entsprechenden Greifvorrichtung 6, mit der die Ausgangsplatten sowohl gehalten als auch unter Anwendung von Druck gegen die anderen Platten verschoben werden können. Wie in Figur 5 bildlich dargestellt, können die Ausgangsplatten (3 bzw 7) auf einer Vorrichtung 5 gehalten werden, die wie in Figur 5c dargestellt, bei der Herstellung von höherlagigen thermoplastischen Platten entsprechend bewegt werden kann. Die Vorrichtung 5 ist so ausgestattet, dass sie zum Andrücken der Ausgangsplatte 3 (bzw 7) in Richtung der Ausgangsplatte 4 eingesetzt werden kann. Ein Zurückfahren der Vorrichtung 5 erfolgt, wie in Figur 5c dargestellt, erst vor Wiederholung der Schritt a) bis e), um eine drei- oder höherlagige thermoplastische Platte herzustellen. Die mittlerweile zweilagige Ausgangsplatte ist in Figur 5c mit "7" gekennzeichnet, die neue dünnere Ausgangsplatte mit "8".

Weiterhin ist es bevorzugt, dass im erfindungsgemäßen Verfahren im Rahmen von Schritt e) ein Verpressen der thermisch zu verschweißenden zusammengefügten dünneren thermoplastischen Platten durchgeführt wird. Das Verpressen erfolgt im Allgemeinen im Sekunden- bis Minutenbereich und/oder bei einem Pressdruck von 0,01 bis 2,0 bar, vorzugsweise von 0,1 bis 1,0 bar.

Erfindungsgemäß werden in Schritt b) zwei Heizelemente aus zueinander entgegengesetzten Richtungen in den Zwischenraum eingeführt und/oder zwei Heizelement in Schritt d) in jeweils zueinander entgegengesetzte Richtung aus dem Zwischenraum wieder entfernt. In den Figuren 2 bis 5 ist dies bildlich dargestellt, wonach die beiden Heizelemente 1 und 2 vorzugsweise als Platten, jeweils in entgegengesetzter Richtung zueinander in den Zwischenraum eingeführt werden und diese Bewegungsrichtung wird auch beim Ausführen beibehalten, was im Rahmen des erfindungsgemäßen Verfahrens besonders bevorzugt ist.

Erfindungsgemäß bevorzugt werden in Schritt b) zwei Heizelemente aus jeweils zueinander entgegengesetzte Richtungen in den Zwischenraum eingeführt und zwei Heizelemente in Schritt d) in jeweils zueinander entgegengesetzte Richtungen aus dem Zwischenraum wieder entfernt.

Erfindungsgemäß ist es bevorzugt, dass die Heizelemente in den Schritte b) und/oder d) mit einer Geschwindigkeit von 0,1 bis 5 m/s, vorzugsweise von 0,3 bis 3 m/s, bewegt werden.

In einer weiteren bevorzugten Ausführungsform der vorliegenden Erfindung werden die Heizelemente parallel zur xy-Ebene und entlang der y-Richtung (Breite) der zwei dünneren thermoplastischen Platten bewegt. Es ist außerdem bevorzugt, dass im erfindungsgemäßen Verfahren die Umstellzeit kurz gehalten wird. Unter Umstellzeit wird die Gesamtdauer der Schritte b) bis e) verstanden. Dies bedeutet, dass die Gesamtdauer der Schritte b) bis e) maximal 20 Sekunden, vorzugsweise maximal 10 Sekunden, insbesondere maximal 5 Sekunden, beträgt.

Weiterhin ist es bevorzugt, dass das erfindungsgemäße Verfahren in einer thermisch isolierten Einhausung durchgeführt wird und eine um +/- 10°C konstante Temperatur im Bereich von 40 bis 200 °C, bevorzugt von 50 bis 100 °C in der thermischen Einhausung, aufrecht erhalten wird.

Vorzugsweise ist die erste dünnere thermoplastische Platte eine Schaumstoffplatte, wobei die zu verschweißende Oberfläche schäumhautfrei ist. Es ist außerdem bevorzugt, dass die zweite dünnere thermoplastische Platte eine Schaumstoffplatte ist, wobei die zu verschweißende Oberfläche schäumhautfrei ist.

Vorzugsweise ist beim thermischen Verschweißen pro zu verschweißendem Plattenpaar mindestens eine, vorzugsweise beide, thermisch zu verschweißenden Oberflächen der dünneren thermoplastischen Platten (Ausgangsplatten) schäumhautfrei. Unter dem Begriff "schäumhautfrei" wird im Rahmen der vorliegenden Erfindung verstanden, dass die bei den Herstellungsprozessen der jeweiligen dünneren thermoplastischen Platte entstandene Schäumhaut beispielsweise durch Hobeln oder Fräsen wieder entfernt wird. Der Vollständigkeit halber wird darauf hingewiesen, dass bei Verwendung eines Extrusionsschaumstoff die entsprechende Oberfläche auch als "extrusionshautfrei" anstelle von "schäumhautfrei" bezeichnet wird.

Weiterhin ist erfindungsgemäß bevorzugt, dass die Oberfläche der ersten dünneren thermoplastischen Platte beim thermischen Verschweißen auf Temperaturen von 50 bis 300 °C oberhalb der Glasübergangstemperatur, bei amorphen thermoplastischen Schaumstoffen oder von 50 bis 100 °C oberhalb der Schmelztemperatur bei teilkristallinen thermoplastischen Schaumstoffen erwärmt wird. Es ist außerdem bevorzugt, dass die Oberfläche der zweiten dünneren thermoplastischen Platte beim thermischen Verschweißen auf Temperaturen von 50 bis 300 °C oberhalb der Glasübergangstemperatur bei amorphen thermoplastischen Polymeren oder von 50 bis 100 °C oberhalb der Schmelztemperatur bei teilkristallinen thermoplastischen Polymeren erwärmt wird. Die mit dem erfindungsgemäßen Verfahren hergestellten thermoplastischen Platten können zusätzliche Stoffe/Verbindungen mit speziellen Verwendungseigenschaften, beispielsweise Flammschutzmittel oder Absorber von elektromagnetischer Strahlung, enthalten. Erfindungsgemäß werden solche zusätzlichen Stoffe vor dem thermischen Verschweißen auf mindestens eine Oberfläche der thermisch zu verschweißenden Ausgangsplatten aufgetragen. Vorzugsweise werden diese Stoffe pro zu verschweißendem Plattenpaar auf beide Oberflächen der Ausgangsplatten aufgetragen.

In einer Ausführungsform der vorliegenden Erfindung enthält die erste dünnere thermoplastische Platte mindestens ein Flammschutzmittel. Flammschutzmittel als solche sind dem Fachmann bekannt. Vorzugsweise ist das Flammschutzmittel ausgewählt aus einem Phosphat, einem Phosphit, einem Phosphonat, einem Polyphosphonat, Melamin, einem Aluminiumoxidhydrat oder einer halogenierten organischen Verbindung.

Die zweite dünnere thermoplastische Platte kann ebenfalls mindestens ein Flammschutzmittel enthalten, vorzugsweise ist das Flammschutzmittel ausgewählt aus einem Phosphat, einem Phosphit, einem Phosphonat, einem Polyphosphonat, Melamin, einem Aluminiumoxidhydrat oder einer halogenierten organischen Verbindung.

Die vorgenannten Flammschutzmittel, vorzugsweise die phosphorhaltigen Flammschutzmittel, aber nicht die halogenierten organischen Verbindungen, werden vorzugsweise vor dem thermischen Verschweißen direkt auf mindestens eine Oberfläche (pro Plattenpaar) der zu verschweißenden Ausgangsplatten aufgetragen.

Bevorzugte Phosphate und Phosphonate sind ausgewählt aus DMMP (Dimethylmethylphosphonat), DMPP (Dimethylpropylphosphonat), TCEP (Tris(chlorethyl)phosphonat), TCPP (Tris(chlorpropyl)phosphat), TDCPP (tris(dichlorisoproyl)phosphat), TPP (Triphenylphosphat), TEHP (Tris-(2-ethylhexyl)phosphat), TKP (Trikresylphosphat) oder TCEP (Trichlorpropylphosphat).

Bevorzugte halogenierte organische Verbindungen sind bromhaltige organische Verbidnungen, bevorzugt sind HBCD (Hexabromcyclododecan) oder bromierte Polystyrole. Bromierte Polystyrole sind kommerziell erhältlich, beispielsweise von *Emerald, Fa. Great Lakes.* Sie werden vorzugsweise in Mengen von 0,5 bis 5 Gew.-% (bezogen auf die Ausgangsplatte) eingesetzt. Sofern halogenierte organische Verbindungen als Flammschutzmittel eingesetzt werden, erfolgt dies vorzugsweise bereits während des Herstellungsprozesses der Ausgangsplatten, das heißt, das Flammschutzmittel ist gleichmäßig über die gesamte Dicke der jeweiligen Ausgangsplatte verteilt.

Ein besonders bevorzugtes Flammschutzmittel ist Dimethylpropylphosphonat (DMPP), das beispielsweise erhältlich ist unter der Bezeichnung *Levagard DMPP* von der Firma *Lanxess.* In einer Ausführungsform der vorliegenden Erfindung ist Blähgraphit bevorzugt, der ebenfalls als Absorber verwendet werden kann.

Sofern erfindungsgemäß ein Flammschutzmittel verwendet wird, ist es bevorzugt, dass das thermische Verschweißen in Gegenwart von mindestens einem Flammschutzmittel durchgeführt wird.

Zusätzlich kann pro zu verschweißendem Plattenpaar auf mindestens eine, vorzugsweise auf beide thermisch zu verschweißenden Oberflächen der dünneren thermoplastischen Platten, das Flammschutzmittel in Mengen von mehr als 5 g/m$^2$ aufgetragen wird. Vorzugsweise wird auf beide thermisch zu verschweißenden Oberflächen das Flammschutzmittel in Mengen von mehr als 10 g/m$^2$, insbesondere von mehr als 15 g/m$^2$, aufgetragen.

In einer möglichen Ausführungsform der vorliegenden Erfindung wird das thermische Verschweißen in Gegenwart von mindestens zwei Flammschutzmitteln durchgeführt, wobei 0,5 bis 5 Gew.-% von mindestens eine halogenierten organischen Verbindung während der Herstellung der Ausgangsplatten in diese eingebracht werden. Vor dem thermischen Verschweißen wird mindestens ein weiteres Flammschutzmittel, vorzugsweise ein phosphorhaltiges Flammschutzmittel, auf mindestens eine thermisch zu verschweißende Oberfläche der Ausgangsplatten pro Plattenpaar aufgetragen, vorzugsweise in Mengen von mehr als 10 g/m$^2$. Das weitere Flammschutzmittel ist somit nach dem Verschweißungsvorgang größtenteils (also zu mehr als 90 %) in der Nähe der Schweißnaht der thermoplastischen Platte angeordnet.

In einer weiteren Ausführungsform der vorliegenden Erfindung wird im erfindungsgemäßen Verfahren zur Herstellung von zumindest zweilagigen thermoplastischen Platten durch thermisches Verschweißen zumindest eine erste dünnere thermoplastische Platte mit einer Glasübergangstemperatur ($T_{G1}$) und einer zweiten dünneren thermoplastischen Platte mit einer Glasübergangstemperatur ($T_{G2}$) durchgeführt. Die Glasübergangstemperatur ($T_{G1}$) der ersten dünneren thermoplastischen Platte ist kleiner als die Glasübergangstemperatur ($T_{G2}$) der zweiten dünneren thermoplastischen Platte. In dieser Ausführungsform des erfindungsgemäßen Verfahrens ist die Dichte der beiden dünneren thermoplastischen Platten unerheblich. Für die Schritte a) bis e) gelten die zuvor beschriebenen Ausführungen und Bevorzugungen entsprechend.

In einer weiteren Ausführungsform der vorliegenden Erfindung wird eine zumindest zweilagige Platte hergestellt. Dabei wird eine erste dünnere thermoplastische Platte mit einer duroplastischen (duromeren) Platte verschweißt. In dieser Ausführungsform wird die duroplastische Platte an der Oberfläche aufgeraut, beispielsweise durch Hobeln oder spanende Bearbeitung. Zwischen die dünnere thermoplastische Schaumstoffplatte und die dünnere duromeren Platte werden, wie im erfindungsgemäßen Verfahren, zumindest zwei Heizelemente eingeführt und die Oberfläche der dünneren thermoplastischen Platte aufgeschmolzen. Anschließend wird die dünnere thermoplastische Platte gegen die (nicht angeschmolzene) duromere Platte gedrückt.

Nachfolgend wird die folgende Erfindung anhand von Beispielen näher erläutert.

<u>Beispiele</u>

Dünnere thermoplastische Platten

Es wurden folgende dünnere thermoplastische Platten eingesetzt:

Styropor Dichte 15 g/l: Platten geschäumt aus Styropor® F15E (BASF SE)
Styrodur Dichte 32 g/l: Styrodur® 3035 CS (BASF SE)
Styrodur Dichte 46 g/l: Styrodur® 5000 CS (BASF SE)
Neopor Dichte 15 g/l: Platten geschäumt aus Neopor® 2200(BASF SE)
PS/PPE Dichte 48: Platte geschäumt auf Versuchsanlage (XPS-Verfahren) aus Noryl® FN215X (Firma Sabic)
PET-Schaum Dichte 80 g/l: AC 80 (Firma Armacell)
PET-Schaum Dichte 100 g/l: AC 100 (Firma Armacell)
PES-Schaum Dichte 50 g/l: Dinvinylcell F50 (Firma Diab)
SAN-Schaum Dichte 33 g/l: Platte geschäumt auf Versuchsanlage (XPS-Verfahren) aus Luran 368R (Firma Styrolution)
PMMA: Platten aus Plexiglas® WH46SC (Firma Evonik)
ABS/ASA: Platten aus Formaterm (Firma Röchling)

Herstellung der zweilagigen thermoplastischen Platten

Die erste dünnere thermoplastische Platte und die zweite dünnere thermoplastische Platte wurden in einem Abstand (a) (siehe Tabelle 1) parallel zueinander ausgerichtet, so dass sie einen Zwischenraum ausbildeten.

Die Dichte (D1) und die Dichte (D2) der ersten dünneren thermoplastischen Platte und der zweiten dünneren thermoplastischen Platte sind in der Tabelle 1 zusammen mit den weiteren Parametern zur Herstellung sowie den Eigenschaften der erfindungsgemäß hergestellten zweilagigen thermoplastischen Platten angegeben.

Ein erstes und ein zweites Heizelement wurden auf parallel zueinander versetzten Ebenen und parallel zu den beiden dünneren thermoplastischen Platten in den Zwischenraum eingeführt. Der Abstand (a1) zwischen der ersten dünneren thermoplastischen Platte und dem ersten Heizelement ist ebenso wie der Abstand (a2) zwischen der zweiten dünneren thermoplastischen Platte und dem zweiten Heizelement in der Tabelle 1 angegeben. Die Temperatur des ersten Heizelements und des zweiten Heizelements war identisch (T in Tabelle 1). Die beiden Heizelemente wurden für eine Zeit (t) zwischen den beiden dünneren thermoplastischen Platten belassen.

Anschließend wurden die Heizelemente aus dem Zwischenraum zwischen den beiden dünneren thermoplastischen Platten entfernt und eine Platte gegen die Oberfläche der jeweiligen anderen dünneren thermoplastischen Platte gedrückt.

Die so erhaltene zweilagige thermoplastische Platte wies die in der Tabelle 1 angegebene Zugfestigkeit auf. Die Zugfestigkeit wurde bestimmt durch nach DIN EN ISO 1798:2008.

Tabelle 1

| Beispiel | erste Platte | zweite Platte | D1 [g/l] | D2 [g/l] | T [°C] | t [sec] | a1 [mm] | a2 [mm] | a [mm] | Zugfestigkeit [N/mm$^2$] |
|---|---|---|---|---|---|---|---|---|---|---|
| 1 | Styropor | Styrodur | 15 | 32 | 350 | 1,6 | 2,0 | 0,7 | 32,7 | 0,23 |
| 2 | Styrodur | Styrodur | 32 | 46 | 350 | 1,6 | 0,7 | 0,3 | 31,0 | 0,53 |
| 3 | Neo-por | Styrodur | 15 | 32 | 350 | 1,6 | 2,4 | 0,7 | 33,1 | 0,21 |
| 4 | E-por | Sturodur | 25 | 32 | 350 | 1,6 | 1,4 | 0,7 | 32,1 | 0,28 |
| 5 | Styrodur | PS/PPE | 32 | 48 | 370 | 3,0 | 1,4 | 0,7 | 32,1 | 0,40 |
| 6 | PET | PET | 80 | 100 | 360 | 2,5 | 1,3 | 0,8 | 32,1 | 0,45 |

(fortgesetzt)

| Beispiel | erste Platte | zweite Platte | D1 [g/l] | D2 [g/l] | T [°C] | t [sec] | a1 [mm] | a2 [mm] | a [mm] | Zugfestigkeit [N/mm²] |
|---|---|---|---|---|---|---|---|---|---|---|
| 7 | PES | PMMA | 45 | 1180 | 390 | 3,0 | 5,05 | 0,5 | 35,5 | 0,28 |
| 8 | SAN | ASA | 33 | 1030 | 360 | 1,8 | 4,0 | 0,7 | 34,7 | 0,39 |

**Patentansprüche**

**1.** Verfahren zur Herstellung von zumindest zweilagigen thermoplastischen Platten durch thermisches Verschweißen von zumindest einer ersten dünneren thermoplastischen Platte (4) mit einer Dichte (D1) und zumindest einer zweiten dünneren thermoplastischen Platte (3) mit einer Dichte (D2), wobei die Dichte (D1) der ersten dünneren thermoplastischen Platte kleiner ist als die Dichte (D2) der zweiten dünneren thermoplastischen Platte, umfassend die folgenden Schritte a) bis e):

a) die erste dünnere thermoplastische Platte und die zweite dünnere thermoplastische Platte werden in einem Abstand (a) parallel zueinander ausgerichtet, so dass sie einen Zwischenraum ausbilden,

b) zumindest ein erstes Heizelement (1) und zumindest ein zweites (2) werden auf parallel zueinander versetzten Ebenen und parallel zu den beiden dünneren thermoplastischen Platten in den Zwischenraum eingeführt, wobei sich die Oberflächen der dünneren thermoplastischen Platten und die Oberflächen der Heizelemente nicht berühren und wobei das erste Heizelement einen Abstand (a1) zu der ersten dünneren thermoplastischen Platte aufweist und das zweite Heizelement einen Abstand (a2) zu der zweiten dünneren thermoplastischen Platte aufweist,

c) die Heizelemente werden so weit zwischen die beiden dünneren thermoplastischen Platten eingeführt, bis zwischen den beiden dünneren thermoplastischen Platten, bezogen auf jede Stelle der Oberfläche der ersten dünneren thermoplastischen Platte, zumindest zeitweise sich das erste Heizelement befunden hat und bis zwischen den beiden dünneren thermoplastischen Platten, bezogen auf jede Stelle der Oberfläche der zweiten dünneren thermoplastischen Platte, zumindest zeitweise sich das zweite Heizelement befunden hat, wobei das erste Heizelement eine Energiemenge (E1) auf die Oberfläche der ersten dünneren thermoplastischen Platte überträgt und das zweite Heizelement eine Energiemenge (E2) auf die Oberfläche der zweiten dünneren thermoplastischen Platte überträgt, wobei die Energiemenge (E1), die das erste Heizelement auf die Oberfläche der ersten dünneren thermoplastischen Platte überträgt kleiner ist als die Energiemenge (E2), die das zweite Heizelement auf die Oberfläche der zweiten dünneren thermoplastischen Platte überträgt,

d) die Heizelemente werden vollständig aus dem Zwischenraum entfernt,

e) mindestens eine der beiden dünneren thermoplastischen Platten wird gegen die Oberfläche der jeweiligen anderen dünneren thermoplastischen Platte gedrückt.

**2.** Verfahren gemäß Anspruch 1, **dadurch gekennzeichnet, dass**

i) die Energiemenge (E1), die das erste Heizelement (1) auf die erste dünnere thermoplastische Platte (4) überträgt, eingestellt wird durch den Abstand (a1) zwischen dem ersten Heizelement und der ersten dünneren thermoplastischen Platten, und/oder

ii) die Energiemenge (E2), die das zweite Heizelement (2) auf die zweite dünnere thermoplastische Platte (3) überträgt, eingestellt wird durch den Abstand (a2) zwischen dem zweiten Heizelement und der zweiten dünneren thermoplastischen Platte.

**3.** Verfahren gemäß Anspruch 1 oder 2, **dadurch gekennzeichnet, dass**

i) die Energiemenge (E1), die das erste Heizelement (1) auf die erste dünnere thermoplastische Platte (4) überträgt, eingestellt wird durch die Temperatur (T1) des ersten Heizelements, und/oder

ii) die Energiemenge (E2), die das zweite Heizelement (2) auf die zweite dünnere thermoplastische Platte (3) überträgt, eingestellt wird durch die Temperatur (T2) des zweiten Heizelements.

**4.** Verfahren gemäß einem der Ansprüche 1 bis 3, **dadurch gekennzeichnet, dass**

i) die Dichte (D1) der ersten dünneren thermoplastischen Platte (4) im Bereich von 10 bis 70 g/l, vorzugsweise im Bereich von 10 bis 50 g/l und insbesondere bevorzugt im Bereich von 10 bis 30 g/l, liegt, und/oder
ii) die Dichte (D2) der zweiten dünneren thermoplastischen Platte (3) im Bereich von 25 bis 100 g/l, vorzugsweise im Bereich von 30 bis 100 g/l und insbesondere bevorzugt im Bereich von 30 bis 75 g/l liegt, und/oder
iii) die Dichte (D1) um mindestens 1 g/l geringer ist als die Dichte (D2), vorzugsweise um mindestens 2 g/l und insbesondere bevorzugt um mindestens 5 g/l.

5. Verfahren gemäß einem der Ansprüche 1 bis 4, **dadurch gekennzeichnet, dass** die Heizelemente (1, 2), wenn sie in den Zwischenraum eingeführt worden sind, für eine Zeit im Bereich von 0,2 bis 10 Sekunden, vorzugsweise im Bereich von 0,5 bis 7,5 Sekunden und insbesondere bevorzugt im Bereich von 1,0 bis 4,0 Sekunden, angehalten werden.

6. Verfahren gemäß einem der Ansprüche 1 bis 5, **dadurch gekennzeichnet, dass**

i) die erste dünnere thermoplastische Platte (4) eine Schaumstoffplatte ist auf Basis eines Polymers ausgewählt aus der Gruppe bestehend aus Polystyrol, Polystyrolcopolymeren, Polyethersulfon, Polysulfon, Polyethylenterephthalat, Polyurethan, Polyolefinen, Polyolefincopolymeren und Acrylpolymeren, vorzugsweise ein Extrusionsschaumstoff oder ein Partikelschaumstoff, mehr bevorzugt ein Extrusionsschaumstoff auf Basis eines Polymers, ausgewählt aus der Gruppe bestehend aus Polystyrol, Polystyrolcopolymeren, Polyethersulfon, Polysulfon, thermoplastischem Polyurethan und Polyethylenterephthalat, am meisten bevorzugt ein Extrusionsschaumstoff auf Basis eines Polymers, ausgewählt aus der Gruppe bestehend aus Polystyrol, Polystyrolcopolymeren und Polyethylenterephthalat, und/oder
ii) die zweite dünnere thermoplastische Platte (3) ein thermoplastisches Polymer ausgewählt aus der Gruppe bestehend aus Polystyrol, Polystyrolcopolymeren, Polyethersulfon, Polysulfon, Polyethylenterephthalat, Polyurethan, Polyolefinen Polyolefincopolymeren und Acrylpolymeren ist, vorzugsweise ein Schaumstoff, mehr bevorzugt ein Extrusionsschaumstoff oder ein Partikelschaumstoff, insbesondere bevorzugt ein Extrusionsschaumstoff auf Basis eines Polymers, ausgewählt aus der Gruppe bestehend aus Polystyrol, Polystyrolcopolymeren, Polyethersulfon, Polysulfon, thermoplastischem Polyurethan und Polyethylenterephthalat, am meisten bevorzugt ein Extrusionsschaumstoff auf Basis eines Polymers, ausgewählt aus der Gruppe bestehend aus Polystyrol, Polystyrolcopolymeren und Polyethylenterephthalat.

7. Verfahren gemäß einem der Ansprüche 1 bis 6, **dadurch gekennzeichnet, dass** die durch das thermische Verschweißen ausgebildete Schweißnaht eine Dicke von 30 bis 500 $\mu$m, vorzugsweise von 50 bis 300 $\mu$m, mehr bevorzugt von 70 bis 200 $\mu$m und am meisten bevorzugt von 80 bis 150 $\mu$m aufweist.

8. Verfahren gemäß einem der Ansprüche 1 bis 7, **dadurch gekennzeichnet, dass**

i) die erste dünnere thermoplastische Platte (4) eine Schaumstoffplatte ist, wobei die zu verschweißende Oberfläche schäumhautfrei ist, und/oder
ii) die zweite dünnere thermoplastische Platte (3) eine Schaumstoffplatte ist, wobei die zu verschweißende Oberfläche schäumhautfrei ist.

9. Verfahren gemäß einem der Ansprüche 1 bis 8, **dadurch gekennzeichnet, dass** in Schritt b) zwei Heizelemente (1, 2) aus jeweils zueinander entgegengesetzten Richtungen in den Zwischenraum eingeführt werden und/oder zwei Heizelemente in Schritt d) in jeweils zueinander entgegengesetzten Richtungen aus dem Zwischenraum wieder entfernt werden.

10. Verfahren gemäß einem der Ansprüche 1 bis 9, **dadurch gekennzeichnet, dass**

i) der Abstand (a1) zwischen dem ersten Heizelement (1) und der ersten dünneren thermoplastischen Platte (4) im Bereich von 0,5 bis 10 mm, vorzugsweise im Bereich von 1,0 bis 7,5 mm, mehr bevorzugt im Bereich von 1 bis 5 mm und/oder
ii) der Abstand (a2) zwischen dem zweiten Heizelement (2) und der zweiten dünneren thermoplastischen Platte (3) im Bereich von 0,2 bis 7,5 mm, vorzugsweise im Bereich von 0,4 bis 5,0 mm, mehr bevorzugt im Bereich von 0,4 bis 3,0 mm liegt.

11. Verfahren gemäß einem der Ansprüche 1 bis 10, **dadurch gekennzeichnet, dass**

i) genau zwei Heizelemente (1, 2) verwendet werden und/oder die Heizelemente Heizplatten sind, vorzugsweise indirekt mittels IR-Strahler aufgeheizte Heizplatten mit einer Oberflächentemperatur im Bereich von 200 bis 700 °C, insbesondere im Bereich von 300 bis 500 °C, und/oder

ii) die Heizelemente in den Schritten b) und/oder d) mit einer Geschwindigkeit von 0,1 bis 5 m/s, vorzugsweise von 0,3 bis 3 m/s, bewegt werden.

12. Verfahren gemäß einem der Ansprüche 1 bis 11, **dadurch gekennzeichnet, dass**

i) die erste dünnere thermoplastische Platte (4) mindestens ein Flammschutzmittel enthält, das vorzugsweise ausgewählt ist aus einem Phosphat, einem Phosphit, einem Phosphonat, einem Polyphosphonat, Melamin, einem Aluminiumoxidhydrat oder einer halogenierten organischen Verbindung, und/oder

ii) die zweite dünnere thermoplastische Platte (3) mindestens ein Flammschutzmittel enthält, das vorzugsweise ausgewählt ist aus einem Phosphat, einem Phosphit, einem Phosphonat, einem Polyphosphonat, Melamin, einem Aluminiumoxidhydrat oder einer halogenierten organischen Verbindung, und/oder

iii) die Oberfläche der ersten dünneren thermoplastischen Platte beim thermischen Verschweißen auf Temperaturen von 50 bis 300 °C oberhalb der Glasübergangstemperatur bei amorphen thermoplastischen Schaumstoffen oder von 50 bis 100 °C oberhalb der Schmelztemperatur bei teilkristallinen thermoplastischen Schaumstoffen erwärmt wird, und/oder

iv) die Oberfläche der zweiten dünneren thermoplastischen Platte beim thermischen Verschweißen auf Temperaturen von 50 bis 300 °C oberhalb der Glasübergangstemperatur bei amorphen thermoplastischen Polymeren oder von 50 bis 100 °C oberhalb der Schmelztemperatur bei teilkristallinen thermoplastischen Polymeren erwärmt wird, und/oder

13. Verfahren gemäß einem der Ansprüche 1 bis 12, **dadurch gekennzeichnet, dass**

i) die Gesamtdauer der Schritte b) bis e) maximal 20 Sekunden, vorzugsweise maximal 10 Sekunden, insbesondere maximal 5 Sekunden beträgt, und/oder

ii) das Verfahren in einer thermisch isolierten Einhausung durchgeführt wird und eine um +/- 10 °C konstante Temperatur im Bereich von 40 bis 200 °C, bevorzugt von 50 bis 100 °C, in der thermischen Einhausung aufrechterhalten wird.

14. Verfahren gemäß einem der Ansprüche 1 bis 13, **dadurch gekennzeichnet, dass**

i) die erste dünnere thermoplastische Platte (4) in Schritt a) eine Länge (x-Richtung) von 500 bis 2800 mm, vorzugsweise von 1000 bis 1500 mm, eine Breite (y-Richtung) von 500 bis 1250 mm, vorzugsweise von 500 bis 900 mm, und eine Dicke (z-Richtung) von 20 bis 200 mm, vorzugsweise von 50 bis 100 mm, aufweist, und/oder

ii) die zweite dünnere thermoplastische Platte (3) in Schritt a) eine Länge (x-Richtung) von 500 bis 2800 mm, vorzugsweise von 1000 bis 1500 mm, eine Breite (y-Richtung) von 500 bis 1250 mm, vorzugsweise von 500 bis 900 mm, und eine Dicke (z-Richtung) von 20 bis 200 mm, vorzugsweise von 50 bis 100 mm, aufweist, und/oder

iii) das erste Heizelement (1) in seiner Länge (x-Richtung) gleich groß oder maximal 10 % größer ist als die Länge (x-Richtung) der ersten dünneren thermoplastischen Platte und das erste Heizelement in seiner Breite (y-Richtung) 30 bis 120 %, vorzugsweise 60 bis 110 %, der Breite (y-Richtung) der ersten dünneren thermoplastischen Platte beträgt, und/oder

iv) das zweite Heizelement (2) in seiner Länge (x-Richtung) gleich groß oder maximal 10 % größer ist als die Länge (x-Richtung) der zweiten dünneren thermoplastischen Platte und das zweite Heizelement in seiner Breite (y-Richtung) 30 bis 120%, vorzugsweise 60 bis 110 %, der Breite (y-Richtung) der zweiten dünneren thermoplastischen Platte beträgt.

v) die Heizelemente parallel zur xy-Ebene und entlang der y-Richtung (Breite) der zwei dünneren thermoplastischen Platten bewegt werden.

**Claims**

1. A process for the production of at least two-layer thermoplastic sheets via thermal welding of at least one first thinner thermoplastic sheet (4) with density (D1) and of at least one second thinner thermoplastic sheet (3) with density (D2), where the density (D1) of the first thinner thermoplastic sheet is smaller than the density (D2) of the second thinner thermoplastic sheet, comprising the following steps a) to e):

a) the first thinner thermoplastic sheet and the second thinner thermoplastic sheet are oriented parallel to one another at a distance (a) from one another, thus forming an intervening space,

b) at least one first heating element (1) and at least one second (2) are introduced along mutually parallel offset planes into the intervening space in a manner that is parallel to the two thinner thermoplastic sheets, where the surfaces of the thinner thermoplastic sheets and the surfaces of the heating elements do not touch one another and with a distance (a1) between the first heating element and the first thinner thermoplastic sheet and a distance (a2) between the second heating element and the second thinner thermoplastic sheet,

c) the heating elements are introduced between the two thinner thermoplastic sheets to an extent such that, in relation to every location on the surface of the first thinner thermoplastic sheet, the first heating element has been present at least temporarily between the two thinner thermoplastic sheets, and to such an extent that, in relation to every location on the surface of the second thinner thermoplastic sheet, the second heating element has been present at least temporarily between the two thinner thermoplastic sheets, where the first heating element transfers a quantity of energy (E1) to the surface of the first thinner thermoplastic sheet and the second heating element transfers a quantity of energy (E2) to the surface of the second thinner thermoplastic sheet, where the quantity of energy (E1) that the first heating element transfers to the surface of the first thinner thermoplastic sheet is smaller than the quantity of energy (E2) that the second heating element transfers to the surface of the second thinner thermoplastic sheet,

d) the heating elements are removed entirely from the intervening space,

e) at least one of the two thinner thermoplastic sheets is pressed against the surface of the respective other thinner thermoplastic sheet.

2. The process according to claim 1, wherein

i) the quantity of energy (E1) that the first heating element (1) transfers to the first thinner thermoplastic sheet (4) is adjusted via the distance (a1) between the first heating element and the first thinner thermoplastic sheet, and/or

ii) the quantity of energy (E2) that the second heating element (2) transfers to the second thinner thermoplastic sheet (3) is adjusted via the distance (a2) between the second heating element and the second thinner thermoplastic sheet.

3. The process according to claim 1 or 2, wherein

i) the quantity of energy (E1) that the first heating element (1) transfers to the first thinner thermoplastic sheet (4) is adjusted via the temperature (T1) of the first heating element, and/or

ii) the quantity of energy (E2) that the second heating element (2) transfers to the second thinner thermoplastic sheet (3) is adjusted via the temperature (T2) of the second heating element.

4. The process according to any of claims 1 to 3, wherein

i) the density (D1) of the first thinner thermoplastic sheet (4) is in the range from 10 to 70 g/l, preferably in the range from 10 to 50 g/l and with particular preference in the range from 10 to 30 g/l, and/or

ii) the density (D2) of the second thinner thermoplastic sheet (3) is in the range from 25 to 100 g/l, preferably in the range from 30 to 100 g/l and with particular preference in the range from 30 to 75 g/l, and/or

iii) the density (D1) is smaller by at least 1 g/l than the density (D2), preferably by at least 2 g/l and with particular preference by at least 5 g/l.

5. The process according to any of claims 1 to 4, wherein when the heating elements (1, 2) have been introduced into the intervening space they are kept there for a time in the range from 0.2 to 10 seconds, preferably in the range from 0.5 to 7.5 seconds, and with particular preference in the range from 1.0 to 4.0 seconds.

6. The process according to any of claims 1 to 5, wherein

i) the first thinner thermoplastic sheet (4) is a foam sheet based on a polymer selected from the group consisting of polystyrene, polystyrene copolymers, polyether sulfone, polysulfone, polyethylene terephthalate, polyurethane, polyolefins, polyolefin copolymers and acrylic polymers, preferably being an extruded foam or a molded foam, more preferably an extruded foam based on a polymer selected from the group consisting of polystyrene, polystyrene copolymers, polyether sulfone, polysulfone, thermoplastic polyurethane, and polyethylene terephthalate, most preferably an extruded foam based on a polymer selected from the group consisting of polystyrene, polystyrene copolymers, and polyethylene terephthalate, and/or

ii) the second thinner thermoplastic sheet (3) is a thermoplastic polymer selected from the group consisting of polystyrene, polystyrene copolymers, polyether sulfone, polysulfone, polyethylene terephthalate, polyurethane, polyolefins, polyolefin copolymers and acrylic polymers, preferably a foam, more preferably an extruded foam or a molded foam, with particular preference an extruded foam based on a polymer selected from the group consisting of polystyrene, polystyrene copolymers, polyether sulfone, polysulfone, thermoplastic polyurethane, and polyethylene terephthalate, most preferably an extruded foam based on a polymer selected from the group consisting of polystyrene, polystyrene copolymers, and polyethylene terephthalate.

7. The process according to any of claims 1 to 6, wherein the thickness of the weld formed by the thermal welding process is from 30 to 500 $\mu$m, preferably from 50 to 300 $\mu$m, more preferably from 70 to 200 $\mu$m, and most preferably from 80 to 150 $\mu$m.

8. The process according to any of claims 1 to 7, wherein

i) the first thinner thermoplastic sheet (4) is a foam sheet, where the surface to be welded is free from the foam skin, and/or
ii) the second thinner thermoplastic sheet (3) is a foam sheet, where the surface to be welded is free from foam skin.

9. The process according to any of claims 1 to 8, wherein in step b) two heating elements (1, 2) are introduced from respectively mutually opposite directions into the intervening space and/or in step d) two heating elements are in turn removed in respectively mutually opposite directions from the intervening space.

10. The process according to any of claims 1 to 9, wherein

i) the distance (a1) between the first heating element (1) and the first thinner thermoplastic sheet (4) is in the range from 0.5 to 10 mm, preferably in the range from 1.0 to 7.5 mm, more preferably in the range from 1 to 5 mm, and/or
ii) the distance (a2) between the second heating element (2) and the second thinner thermoplastic sheet (3) is in the range from 0.2 to 7.5 mm, preferably in the range from 0.4 to 5.0 mm, more preferably in the range from 0.4 to 3.0 mm.

11. The process according to any of claims 1 to 10, wherein

i) precisely two heating elements (1, 2) are used and/or the heating elements are heating plates, preferably heating plates with a surface temperature in the range from 200 to 700°C, in particular in the range from 300 to 500°C, heated indirectly by means of IR sources, and/or
ii) the heating elements in steps b) and/or d) are moved with a velocity of from 0.1 to 5 m/s, preferably from 0.3 to 3 m/s.

12. The process according to any of claims 1 to 11, wherein

i) the first thinner thermoplastic sheet (4) comprises at least one flame retardant preferably selected from a phosphate, a phosphite, a phosphonate, a polyphosphonate, melamine, an aluminum oxide hydrate and a halogenated organic compound, and/or
ii) the second thinner thermoplastic sheet (3) comprises at least one flame retardant preferably selected from a phosphate, a phosphite, a phosphonate, a polyphosphonate, melamine, an aluminum oxide hydrate and a halogenated organic compound, and/or
iii) during the thermal welding process the surface of the first thinner thermoplastic sheet is heated to temperatures of from 50 to 300°C above the glass transition temperature in the case of amorphous thermoplastic foams or from 50 to 100°C above the melting point in the case of semicrystalline thermoplastic foams, and/or
iv) during the thermal welding process the surface of the second thinner thermoplastic sheet is heated to temperatures of from 50 to 300°C above the glass transition temperature in the case of amorphous thermoplastic foams or from 50 to 100°C above the melting point in the case of semicrystalline thermoplastic polymers, and/or

13. The process according to any of claims 1 to 12, wherein

i) the total duration of the steps b) to e) is at most 20 seconds, preferably at most 10 seconds, in particular at most 5 seconds, and/or

ii) the process is carried out in a thermally insulated enclosure and in the thermal enclosure a temperature is maintained that is constant to the extent of +/- 10°C in the range from 40 to 200°C, preferably from 50 to 100°C.

**14.** The process according to any of claims 1 to 13, wherein

i) the length (x-direction) of the first thinner thermoplastic sheet (4) in step a) is from 500 to 2800 mm, preferably from 1000 to 1500 mm, its width (y-direction) being from 500 to 1250 mm, preferably from 500 to 900 mm, and its thickness (z-direction) being from 20 to 200 mm, preferably from 50 to 100 mm, and/or

ii) the length (x-direction) of the second thinner thermoplastic sheet (3) in step a) is from 500 to 2800 mm, preferably from 1000 to 1500 mm, its width (y-direction) being from 500 to 1250 mm, preferably from 500 to 900 mm, and its thickness (z-direction) being from 20 to 200 mm, preferably from 50 to 100 mm, and/or

iii) the length (x-direction) of the first heating element (1) is the same as or at most 10% greater than the length (x-direction) of the first thinner thermoplastic sheet, and the width (y-direction) of the first heating element is from 30 to 120%, preferably from 60 to 110%, of the width (y-direction) of the first thinner thermoplastic sheet, and/or

iv) the length (x-direction) of the second heating element (2) is the same as or at most 10% greater than the length (x-direction) of the second thinner thermoplastic sheet, and the width (y-direction) of the second heating element is from 30 to 120%, preferably from 60 to 110%, of the width (y-direction) of the second thinner thermoplastic sheet.

v) the heating elements are moved in a manner that is parallel to the xy-plane and along the y-direction (width) of the two thinner thermoplastic sheets.

## Revendications

**1.** Procédé de fabrication de plaques thermoplastiques au moins bicouches par soudage thermique d'au moins une première plaque thermoplastique plus mince (4) ayant une densité (D1) et d'au moins une deuxième plaque thermoplastique plus mince (3) ayant une densité (D2), la densité (D1) de la première plaque thermoplastique plus mince étant inférieure à la densité (D2) de la deuxième plaque thermoplastique plus mince, comprenant les étapes a) à e) suivantes :

a) la première plaque thermoplastique plus mince et la deuxième plaque thermoplastique plus mince sont orientées parallèlement l'une de l'autre à un écart (a), de telle sorte qu'elles forment un espace intermédiaire,

b) au moins un premier élément chauffant (1) et au moins un deuxième (2) sont insérés dans des plans décalés parallèlement l'un à l'autre et parallèlement aux deux plaques thermoplastiques plus minces dans l'espace intermédiaire, les surfaces des plaques thermoplastiques plus minces et les surfaces des éléments chauffants n'étant pas en contact, et le premier élément chauffant présentant un écart (a1) avec la première plaque thermoplastique plus mince et le deuxième élément chauffant présentant un écart (a2) avec la deuxième plaque thermoplastique plus mince,

c) les éléments chauffants sont insérés entre les deux plaques thermoplastiques plus minces à une distance telle que le premier élément chauffant se trouve au moins temporairement entre les deux plaques thermoplastiques plus minces, par rapport à chaque emplacement de la surface de la première plaque thermoplastique plus mince, et que le deuxième élément chauffant se trouve au moins temporairement entre les deux plaques thermoplastiques plus minces, par rapport à chaque emplacement de la surface de la deuxième plaque thermoplastique plus mince, le premier élément chauffant transférant une quantité d'énergie (E1) à la surface de la première plaque thermoplastique plus mince et le deuxième élément chauffant transférant une quantité d'énergie (E2) à la surface de la deuxième plaque thermoplastique plus mince, la quantité d'énergie (E1) que le premier élément chauffant transfère à la surface de la première plaque thermoplastique plus mince étant inférieure à la quantité d'énergie (E2) que le deuxième élément chauffant transfère à la surface de la deuxième plaque thermoplastique plus mince,

d) les éléments chauffants sont entièrement extraits de l'espace intermédiaire,

e) au moins une des deux plaques thermoplastiques plus mince est pressée contre la surface de l'autre plaque thermoplastique plus mince.

**2.** Procédé selon la revendication 1, **caractérisé en ce que**

i) la quantité d'énergie (E1) que le premier élément chauffant (1) transfère à la première plaque thermoplastique plus mince (4) est ajustée par l'écart (a1) entre le premier élément chauffant et la première plaque thermoplastique plus mince, et/ou

ii) la quantité d'énergie (E2) que le deuxième élément chauffant (2) transfère à la deuxième plaque thermoplastique plus mince (3) est ajustée par l'écart (a2) entre le deuxième élément chauffant et la deuxième plaque thermoplastique plus mince.

3. Procédé selon la revendication 1 ou 2, **caractérisé en ce que**

i) la quantité d'énergie (E1) que le premier élément chauffant (1) transfère à la première plaque thermoplastique plus mince (4) est ajustée par la température (T1) du premier élément chauffant, et/ou

ii) la quantité d'énergie (E2) que le deuxième élément chauffant (2) transfère à la deuxième plaque thermoplastique plus mince (3) est ajustée par la température (T2) du deuxième élément chauffant.

4. Procédé selon l'une quelconque des revendications 1 à 3, **caractérisé en ce que**

i) la densité (D1) de la première plaque thermoplastique plus mince (4) se situe dans la plage allant de 10 à 70 g/l, de préférence dans la plage allant de 10 à 50 g/l et de manière particulièrement préférée dans la plage allant de 10 à 30 g/l, et/ou

ii) la densité (D2) de la deuxième plaque thermoplastique plus mince (3) se situe dans la plage allant de 25 à 100 g/l, de préférence dans la plage allant de 30 à 100 g/l et de manière particulièrement préférée dans la plage allant de 30 à 75 g/l, et/ou

iii) la densité (D1) est inférieure d'au moins 1 g/l à la densité (D2), de préférence d'au moins 2 g/l et de manière particulièrement préférée d'au moins 5 g/l.

5. Procédé selon l'une quelconque des revendications 1 à 4, **caractérisé en ce que**, lorsqu'ils ont été insérés dans l'espace intermédiaire, les éléments chauffants (1, 2) sont maintenus pendant une durée dans la plage allant de 0,2 à 10 secondes, de préférence dans la plage allant de 0,5 à 7,5 secondes et de manière particulièrement préférée dans la plage allant de 1,0 à 4,0 secondes.

6. Procédé selon l'une quelconque des revendications 1 à 5, **caractérisé en ce que**

i) la première plaque thermoplastique plus mince (4) est une plaque de mousse à base d'un polymère choisi dans le groupe constitué par le polystyrène, les copolymères de polystyrène, la polyéther-sulfone, la polysulfone, le polyéthylène téréphtalate, le polyuréthane, les polyoléfines, les copolymères de polyoléfine et les polymères acryliques, de préférence une mousse extrudée ou une mousse particulaire, de manière davantage préférée une mousse extrudée à base d'un polymère choisi dans le groupe constitué par le polystyrène, les copolymères de polystyrène, la polyéther-sulfone, la polysulfone, le polyuréthane thermoplastique et le polyéthylène téréphtalate, de manière préférée entre toutes une mousse extrudée à base d'un polymère choisi dans le groupe constitué par le polystyrène, les copolymères de polystyrène et le polyéthylène téréphtalate, et/ou

ii) la deuxième plaque thermoplastique plus mince (3) est un polymère thermoplastique choisi dans le groupe constitué par le polystyrène, les copolymères de polystyrène, la polyéther-sulfone, la polysulfone, le polyéthylène téréphtalate, le polyuréthane, les polyoléfines, les copolymères de polyoléfine et les polymères acryliques, de préférence une mousse, de manière davantage préférée une mousse extrudée ou une mousse particulaire, de manière particulièrement préférée une mousse extrudée à base d'un polymère choisi dans le groupe constitué par le polystyrène, les copolymères de polystyrène, la polyéther-sulfone, la polysulfone, le polyuréthane thermoplastique et le polyéthylène téréphtalate, de manière préférée entre toutes une mousse extrudée à base d'un polymère choisi dans le groupe constitué par le polystyrène, les copolymères de polystyrène et le polyéthylène téréphtalate.

7. Procédé selon l'une quelconque des revendications 1 à 6, **caractérisé en ce que** le joint de soudure formé par le soudage thermique présente une épaisseur de 30 à 500 $\mu$m, de préférence de 50 à 300 $\mu$m, de manière davantage préférée de 70 à 200 $\mu$m et de manière préférée entre toutes de 80 à 150 $\mu$m.

8. Procédé selon l'une quelconque des revendications 1 à 7, **caractérisé en ce que**

i) la première plaque thermoplastique plus mince (4) est une plaque de mousse, la surface à souder étant exempte de peau de mousse, et/ou

ii) la deuxième plaque thermoplastique plus mince (3) est une plaque de mousse, la surface à souder étant exempte de peau de mousse.

9. Procédé selon l'une quelconque des revendications 1 à 8, **caractérisé en ce que** deux éléments chauffants (1, 2) sont insérés dans l'espace intermédiaires à l'étape b) à partir de directions opposées l'une à l'autre et/ou deux éléments chauffants sont extraits de l'espace intermédiaire à l'étape d) dans des directions opposées l'une à l'autre.

10. Procédé selon l'une quelconque des revendications 1 à 9, **caractérisé en ce que**

i) l'écart (a1) entre le premier élément chauffant (1) et la première plaque thermoplastique plus mince (4) se situe dans la plage allant de 0,5 à 10 mm, de préférence dans la plage allant de 1,0 à 7,5 mm, de manière davantage préférée dans la plage allant de 1 à 5 mm, et/ou

ii) l'écart (a2) entre le deuxième élément chauffant (2) et la deuxième plaque thermoplastique plus mince (3) se situe dans la plage allant de 0,2 à 7,5 mm, de préférence dans la plage allant de 0,4 à 5,0 mm, de manière davantage préférée dans la plage allant de 0,4 à 3,0 mm.

11. Procédé selon l'une quelconque des revendications 1 à 10, **caractérisé en ce que**

i) exactement deux éléments chauffants (1, 2) sont utilisés et/ou les éléments chauffants sont des plaques chauffantes, de préférence des plaques chauffantes chauffées indirectement par un émetteur IR ayant une température de surface dans la plage allant de 200 à 700 °C, notamment dans la plage allant de 300 à 500 °C, et/ou

ii) les éléments chauffants sont déplacés aux étapes b) et/ou d) avec une vitesse de 0,1 à 5 m/s, de préférence de 0,3 à 3 m/s.

12. Procédé selon l'une quelconque des revendications 1 à 11, **caractérisé en ce que**

i) la première plaque thermoplastique plus mince (4) contient au moins un agent ignifuge, qui est de préférence choisi parmi un phosphate, un phosphite, un phosphonate, un polyphosphonate, la mélamine, un oxyhydrate d'aluminium ou un composé organique halogéné, et/ou

ii) la deuxième plaque thermoplastique plus mince (3) contient au moins un agent ignifuge, qui est de préférence choisi parmi un phosphate, un phosphite, un phosphonate, un polyphosphonate, la mélamine, un oxyhydrate d'aluminium ou un composé organique halogéné, et/ou

iii) la surface de la première plaque thermoplastique plus mince est portée lors du soudage thermique à des températures de 50 à 300 °C au-dessus de la température de transition vitreuse pour des mousses thermoplastiques amorphes, ou de 50 à 100 °C au-dessus de la température de fusion pour des mousses thermoplastiques partiellement cristallines, et/ou

iv) la surface de la deuxième plaque thermoplastique plus mince est portée lors du soudage thermique à des températures de 50 à 300 °C au-dessus de la température de transition vitreuse pour des polymères thermoplastiques amorphes, ou de 50 à 100 °C au-dessus de la température de fusion pour des polymères thermoplastiques partiellement cristallins, et/ou

13. Procédé selon l'une quelconque des revendications 1 à 12, **caractérisé en ce que**

i) la durée totale des étapes b) à e) est d'au plus 20 secondes, de préférence d'au plus 10 secondes, notamment d'au plus 5 secondes, et/ou

ii) le procédé est réalisé dans une enceinte isolée thermiquement, et une température constante à ± 10 °C dans la plage allant de 40 à 200 °C, de préférence de 50 à 100 °C, est maintenue dans l'enceinte thermique.

14. Procédé selon l'une quelconque des revendications 1 à 13, **caractérisé en ce que**

i) la première plaque thermoplastique plus mince (4) à l'étape a) présente une longueur (direction x) de 500 à 2 800 mm, de préférence de 1 000 à 1 500 mm, une largeur (direction y) de 500 à 1 250 mm, de préférence de 500 à 900 mm, et une épaisseur (direction z) de 20 à 200 mm, de préférence de 50 à 100 mm, et/ou

ii) la deuxième plaque thermoplastique plus mince (3) à l'étape a) présente une longueur (direction x) de 500 à 2 800 mm, de préférence de 1 000 à 1 500 mm, une largeur (direction y) de 500 à 1 250 mm, de préférence de 500 à 900 mm, et une épaisseur (direction z) de 20 à 200 mm, de préférence de 50 à 100 mm, et/ou

iii) le premier élément chauffant (1) est dans sa longueur (direction x) supérieur ou égal ou au plus 10 % supérieur à la longueur (direction x) de la première plaque thermoplastique plus mince, et le premier élément chauffant est dans sa largeur (direction y) 30 à 120 %, de préférence 60 à 110 %, de la largeur (direction y) de la première plaque thermoplastique plus mince, et/ou

iv) le deuxième élément chauffant (2) est dans sa longueur (direction x) supérieur ou égal ou au plus 10 % supérieur à la longueur (direction x) de la deuxième plaque thermoplastique plus mince, et le deuxième élément chauffant est dans sa largeur (direction y) 30 à 120 %, de préférence 60 à 110 %, de la largeur (direction y) de la deuxième plaque thermoplastique plus mince.

v) les éléments chauffants sont déplacés parallèlement au plan xy et le long de la direction y (largeur) des deux plaques thermoplastiques plus minces.

**Fig. 1**

a2

**Fig. 2**

Fig. 3

Fig. 4

**Fig. 5**

**EP 3 237 176 B1**

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 1318164 A
- EP 1213119 A
- DE 10106341 A
- DE 4421016 A
- WO 2012016991 A
- EP 2578381 A
- US 4764328 A

- DE 102012204822 A
- DE 102012204822
- JP 2012232564 A
- EP 2353846 A
- EP 0922559 A
- GB 2435852 A
- WO 2009047487 A